(19) Europäisches Patentamt
European Patent Office
Office européen des brevets

(11) Veröffentlichungsnummer: **0 101 664**
**B1**

(12) **EUROPÄISCHE PATENTSCHRIFT**

(45) Veröffentlichungstag der Patentschrift: **04.06.86**

(51) Int. Cl.[4]: **C 09 B 29/01,** C 09 B 62/00, C 07 C 147/12 // D06P1/06

(21) Anmeldenummer: **83810337.2**

(22) Anmeldetag: **25.07.83**

(54) **Monoazofarbstoffe, deren Herstellung und Verwendung.**

(30) Priorität: **29.07.82 CH 4596/82**

(43) Veröffentlichungstag der Anmeldung: **29.02.84 Patentblatt 84/9**

(45) Bekanntmachung des Hinweises auf die Patenterteilung: **04.06.86 Patentblatt 86/23**

(84) Benannte Vertragsstaaten: **BE CH DE FR GB IT LI**

(56) Entgegenhaltungen:
**CH - A - 360 448**
**CH - A - 364 570**
**FR - A - 871 731**
**FR - A - 1 113 026**
**FR - A - 1 221 165**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Hurter, Rudolf, Laufenburgerstrasse 10/3, CH-4058 Basel (CH)**

**EP 0 101 664 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die der vorliegenden Erfindung zugrunde liegende Aufgabe war es, neue Monoazofarbstoffe zu finden, die zum Färben von natürlichen und synthetischen Polyamiden aus wässrigem Bad geeignet sind, die ferner Nuancen im Bereich Gelb bis Rot haben, und die ausserdem verbesserte Echtheitseigenschaften, insbesondere in der Lichtechtheit, aufweisen.

Es wurde nun gefunden, dass die Monoazofarbstoffe der Formel (1) den genannten Anforderungen genügen.

Gegenstand der vorliegenden Erfindung sind somit Monoazofarbstoffe der Formel

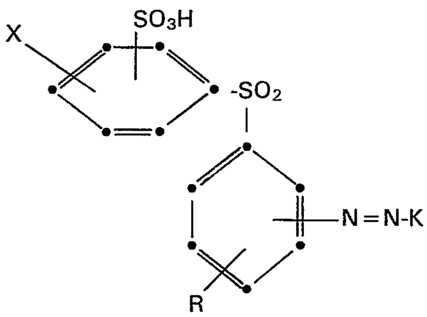

(1),

worin K der Rest eines Amino- oder Alkoxybenzols, Alkoxynaphthalins, Naphthols, Aminonaphthols, Pyrazolons, Aminopyrazols, Indols, Naphthimidazols, Diphenylamins, Tetrahydrochinolins oder Acetessigsäureamids ist, wobei die oben genannten Reste weiter substituiert sein können, und worin R Wasserstoff, Halogen, $C_{1-6}$-Alkyl, Trifluormethyl, Carboxy oder eine $-SO_2-C_{1-6}$-Alkyl, $-SO_2-R_1$,

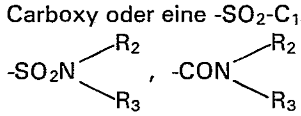

, oder $-CO-R_4$-Gruppe ist, wobei $R_1$ einen gegebenenfalls substituierten Phenyl- oder Naphthyl-$C_{1-4}$-alkylrest, $R_2$ und $R_3$ unabhängig voneinander Wasserstoff oder einen gegebenenfalls substituierten $C_{1-6}$-Alkyl- oder $C_{5-7}$-Cycloalkylrest und $R_4$ einen gegebenenfalls substituierten Phenylrest bedeuten, und worin X Wasserstoff, $C_{1-4}$-Alkyl, $C_{1-4}$-Alkoxy oder Halogen bedeutet, und wobei R in Formel (1) nicht Wasserstoff oder Chlor sein darf, wenn der Rest -N=N-K in o-Stellung zur $-SO_2$-Gruppe an den Phenylring gebunden ist und K der Rest der 2-Amino-8-hydroxynaphthalin-6-sulfonsäure ist, und wobei R in Formel (1) nicht Wasserstoff sein darf, wenn der Rest -N=N-K in o-Stellung zur $-SO_2$-Gruppe an den Phenylring gebunden ist und K der Rest des 1-(3',4'-Dichlorphenyl)-3-methyl-5-aminopyrazols oder eines Aminonaphtholsulfonsäureamids ist.

Der Rest K einer Kupplungskomponente kann die bei Azofarbstoffen üblichen Substituenten enthalten, z.B. Alkylgruppen mit 1 bis 4 Kohlenstoffatomen, wie Methyl, Äthyl, Propyl, Isopropyl, Butyl, Isobutyl, sek.-Butyl und tert.-Butyl, Alkoxygruppen mit 1 bis 4 Kohlenstoffatomen, wie Methoxy, Äthoxy, Propyloxy, Isopropyloxy, Butyloxy, Isobutyloxy, sek.-Butyloxy und tert.-Butyloxy, Phenoxy, Alkanoylaminogruppen mit 1 bis 6 Kohlenstoffatomen, wie Acetylamino oder Propionylamino, Benzoylamino, Aminogruppen, wie $-NH_2$, Methylamino, Äthylamino, Dimethylamino, Diäthylamino, Cyanäthylamino, Hydroxyäthylamino, Di-hydroxyäthylamino, Cyclohexylamino, Benzylamino und Phenylamino, Carbonsäureestergruppen, wie Methoxycarbonyl und Äthoxycarbonyl, Trifluormethyl, Nitro, Cyan, Acetyl, Methylsulfonyl, Carbamoyl, Sulfamoyl, Ureido, Hydroxy, Carboxy, Sulfo, Sulfomethyl und Halogen, wie Fluor, Chlor und Brom, sowie faserreaktive Reste.

Bedeuten R und X Halogen, so kommt unabhängig voneinander beispielsweise ein Fluor-, Chlor- oder Bromatom in Betracht.

Bedeutet R einen $C_{1-6}$-Alkylrest, so kommt beispielsweise ein Methyl-, Äthyl-, Propyl-, Isopropyl-, Butyl-, Isobutyl-, sec.-Butyl-, tert.-Butyl-, Pentyl- oder Hexylrest in Betracht. Vorzugsweise bedeutet R den Methylrest.

Bedeutet R einen $-SO_2-C_{1-6}$-Alkylrest, so kommt beispielsweise ein Methyl-, Äthyl-, Propyl-, Isopropyl-, Butyl-, Isobutyl-, sec.-Butyl-, tert.-Butyl-, Pentyl- oder Hexyl-sulfonylrest in Betracht. Vorzugsweise bedeutet R den Methyl- oder Äthylsulfonylrest.

Bedeutet $R_1$ einen Phenyl- oder Naphthyl-$C_{1-4}$-alkylrest, so kommt beispielsweise der Benzyl-, Phenäthyl- oder Naphthylmethylrest in Betracht, der im Arylteil weitersubstituiert sein kann, beispielsweise durch $C_{1-4}$-Alkylgruppen, wie Methyl, $C_{1-4}$-Alkoxygruppen wie Methoxy und Äthoxy, Halogen, wie Fluor, Chlor oder Brom, Alkanoylaminogruppen mit 1 bis 6 Kohlenstoffatomen, wie Acetylamino, Hydroxy und Carboxy.

Bedeuten $R_2$ und $R_3$ einen $C_{1-6}$-Alkylrest, so kommt unabhängig voneinander beispielsweise der Methyl-, Äthyl-, Propyl-, Isopropyl-, Butyl-, sec.-Butyl-, tert.-Butyl-, Pentyl- oder Hexylrest in Betracht, der weitersubstituiert sein kann, z.B. durch Halogen, wie Fluor, Chlor und Brom, Hydroxy, Cyano und Alkoxy, wie Methoxy, Äthoxy, Propoxy, Isopropoxy und Butoxy. Als Beispiele seien genannt: β-Hydroxyäthyl, β-Methoxyäthyl, β-Cyanoäthyl, β-Chloräthyl.

Bedeuten $R_2$ und $R_3$ einen Cycloalkylrest, so kommt unabhängig voneinander ein Cyclopentyl-, Cyclohexyl- und Cycloheptylrest in Betracht, der weitersubstituiert sein kann, z.B. durch Halogen, wie Fluor, Chlor und Brom, $C_{1-4}$-Alkyl, wie Methyl, Äthyl, Propyl und Isopropyl, $C_{1-4}$-Alkoxy, wie Methoxy. Als Beispiel sei der Methylcyclohexylrest genannt.

Bedeutet $R_4$ den Phenylrest, so kann dieser weitersubstituiert sein, beispielsweise durch $C_{1-4}$-Alkylgruppen, wie Methyl, Äthyl, Propyl, Isopropyl und Butyl, $C_{1-4}$-Alkoxygruppen, wie Methoxy und Äthoxy, Halogen, wie Fluor, Chlor und Brom.

Bedeutet X in Formel (1) einen $C_{1-4}$-Alkylrest, so kommt beispielsweise ein Methyl-, Äthyl-, Propyl-, Isopropyl-, Butyl-, sek.-Butyl-, Isobutyl- oder tert.-Butylrest in Betracht.

Bedeutet X einen $C_{1-4}$-Alkoxyrest, so kommt beispielsweise ein Methoxy-, Äthoxy-, Propoxy-, Isopropoxy-, Butoxy-, Isobutoxy-, sek.-Butoxy- oder tert.-Butoxyrest in Betracht.

Bevorzugt sind die Monoazofarbstoffe der Formel (1), worin

a) X in p-Stellung zur $-SO_2$-Gruppe an den Sulfophenylring gebunden ist,

b) R in o- oder p-Stellung zur $-SO_2$-Gruppe an den Phenylring gebunden ist; und

c) der Rest -N=N-K in o- oder p-Stellung zur $-SO_2$-Gruppe an den Phenylring gebunden ist.

Die Monoazofarbstoffe der Formel (1) können in der Kupplungskomponente (K) durch faserreaktive Gruppen substituiert sein. Geeignete Faserreaktivgruppen sind z.B. solche der aliphatischen Reihe, wie Acryloyl, Mono-, Di- oder Trichlor- bzw. Mono-, Di- oder Tribromacryloyl oder -methacryloyl, wie $-CO-CH=CH-Cl$, $-CO-CCl=CH_2$, $-CO-CH=CHBr$, $-COCBr=CH_2$, $-CO-CBr=CHBr$, $-CO-CCl=CH-CH_3$, ferner $-CO-CCl=CH-COOH$, $-CO-CH=CCl-COOH$, 2-Chlorpropionyl, 3-Phenylsulfonylpropionyl, 3-Methylsulfonylpropionyl, Vinylsulfonyl, β-Chloräthylsulfonyl, β-Sulfatoäthylsulfonyl, β-Methylsulfonyläthylsulfonyl, β-Phenylsulfonyläthylsulfonyl, 2-Fluor-2-chlor-3,3-difluorcyclobutan-1-carbonyl, 2,2,3,3-Tetrafluorcyclobutan-carbonyl-1 oder -sulfonyl-1, β-(2,2,3,3-Tetrafluorcyclobutyl-1)-acryloyl, α- oder β-Alkyl- oder -Arylsulfonyl-acryloyl, wie α- oder β-Methylsulfonylacryloyl.

Besonders für synthetisches Polyamid und für Wolle geeignete Reaktivreste sind: Chloracetyl, Bromacetyl, α,β-Dichlor- oder α,β-Dibrompropionyl, α-Chlor- oder α-Bromacryloyl, 2,4-Difluor-5-chlorpyrimidyl-6, 2,4,6-Trifluoropyrimidyl-5, 2,4-Dichlor-5-methyl-sulfonylpyrimidyl-6, 2,4-Difluor-5-methyl-sulfonylpyrimidyl-6, 2,4-Difluorotriazinyl-6, sowie Fluortriazinylreste der Formel

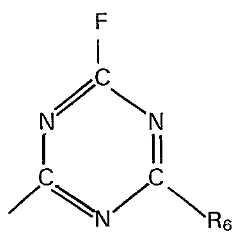

worin $R_6$ eine gegebenenfalls substituierte Aminogruppe oder eine gegebenenfalls verätherte Oxy- oder Thiogruppe bedeutet, wie z.B. die $NH_2$-Gruppe, eine mit $C_1$-$C_4$-Alkylresten mono- oder disubstituierte Aminogruppe, eine $C_1$-$C_4$-Alkoxygruppe, eine $C_1$-$C_4$-Alkylmercaptogruppe, Arylamino, insbesondere Phenylamino, oder mit Methyl, Methoxy, Chlor und vor allem Sulfo substituiertes Phenylamino, Phenoxy, Mono- oder Disulfophenyloxy usw., sowie die entsprechenden Chlortriazinylreste.

Ausgangsprodukte zur Einführung solcher Triazinreste sind z.B. 2,4-Difluor- oder 2,4-Dichlor-6-aminotriazin, 2,4-Difluor- oder 2,4-Dichlor-6-methylaminotriazin, 2,4-Difluor- oder 2,4-Dichlor-6-äthylaminotriazin, 2,4-Difluor- oder 2,4-Dichlor-6-phenylaminotriazin, 2,4-Difluor- oder 2,4-Dichlor-6-(2',3'- oder 4'-sulfophenyl)-aminotriazin, 2,4-Difluor- oder 2,4-Dichlor-6-(2',4'- oder 3',4'- oder 2',5'- oder 4',5'-disulfophenyl)-aminotriazin, 2,4-Difluor- oder 2,4-Dichlor-6-dimethylaminotriazin, 2,4-Difluor- oder 2,4-Dichlor-6-methoxytriazin, 2,4-Difluor- oder 2,4-Dichlor-6-(β-methoxyäthoxy)-triazin, 2,4-Difluor- oder 2,4-Dichlor-6-methylmercaptotriazin, 2,4-Difluor- oder 2,4-Dichlor-6-phenylmercaptotriazin, und 2,4,6-Trichlor- oder 2,4,6-Trifluortriazin.

Besonders bevorzugt sind die Monoazofarbstoffe der Formel (1), worin K ein N-$C_{1-4}$-Alkylamino- oder N,N-Di-$C_{1-4}$-alkylaminobenzolrest, der im Benzolring durch Methyl, Methoxy, Chlor und Acetylamino substituiert sein kann, und worin die N-Alkylreste unabhängig voneinander durch Hydroxy, Chlor, Cyano oder Phenyl substituiert sein können, ein Methoxybenzolrest, der im Benzolring durch Methyl substituiert sein kann, ein Methoxynaphthalinrest, ein Hydroxynaphthalinrest, der durch Sulfo substituiert sein kann, ein Aminonaphtholrest, der im Naphthalinkern durch Sulfo substituiert sein kann, und worin die Aminogruppe durch Methyl, α,β-Dibrompropionyl, α,β-Dibrompropionylaminobenzoyl und 2,6-Difluor-5-chlorpyrimidylaminobenzoyl substituiert sein kann, ein 1-Phenyl-3-methylpyrazolonrest, der im Phenylrest durch Methyl, Äthyl und Chlor substituiert sein kann, ein 1-Phenyl-3-methylaminopyrazolrest, der im Phenylrest durch Chlor und Sulfo substituiert sein kann, ein 2-Methyl- oder 2-Phenylindolrest, der in 1-Stellung durch Äthyl substituiert sein kann, ein N-Methyl- oder N-Äthyl-1,2,3,4-tetrahydrochinolinrest oder ein 1-Chlorphenylamino-2-pentyl-naphthimidazolrest, der im Naphthalinkern durch Hydroxy und Sulfo substituiert ist, und R Wasserstoff, Chlor, Methyl, Trifluormethyl, Carboxy oder eine $-SO_2-C_{1-2}$-Alkyl-, $-SO_2$-Benzyl-,

$-SO_2N\genfrac{}{}{0pt}{}{R_5}{R_6}$, $-CON\genfrac{}{}{0pt}{}{R_5}{R_6}$ oder $-CO-R_7$-Gruppe ist,

wobei $R_5$ Wasserstoff oder $C_{1-3}$-Alkyl, $R_6$ Wasserstoff, $C_{1-6}$-Alkyl, das durch Hydroxy oder Methoxy substituiert sein kann, oder Cyclohexyl und $R_7$ Phenyl oder Chlorphenyl bedeuten, und worin X Wasserstoff, Methyl, Chlor oder Äthoxy ist.

Insbesondere bevorzugt sind die Monoazofarbstoffe der Formel (1), worin K ein N,N-Di-$C_{1-4}$-alkylaminobenzolrest, der im Benzolkern durch Methyl, Methoxy, Chlor und Acetylamino substituiert sein kann, und worin die N-Alkylreste unabhängig voneinander durch Hydroxy, Chlor, Cyano oder Phenyl substituiert sein können, ein 1-Phenyl-3-methylaminopyrazolrest, der im Phenylrest durch Chlor und Sulfo substituiert sein kann, oder ein 2-Methyl- oder 2-Phenylindolrest, der in 1-Stellung durch Äthyl substituiert sein kann, ist.

Bevorzugt sind ferner die Monoazofarbstoffe der Formel

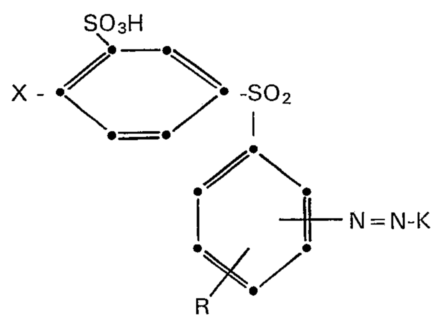

(2),

worin K, R und X die oben angegebenen Bedeutungen haben und R und der Rest -N=N-K in o- oder p-Stellung zur $-SO_2$-Gruppe an den Phenylring gebunden sind.

Insbesondere bevorzugt sind die Monoazofarbstoffe der Formel (2), worin K ein 2-Methyl- oder 2-Phenylindolrest, ein N,N-Diäthyl-3-acetylaminoanilinrest, ein N,N-Diäthyl- oder N,N-Dibutyl-3-methylanilinrest, ein N-Äthyl-N-phenäthyl-3-methylanilinrest oder ein 1-Phenyl-3-methylaminopyrazolrest, X Wasserstoff, Chlor oder Methyl und R Wasserstoff, Chlor, Trifluormethyl, Äthylsulfonyl, p-Chlorbenzoyl, Sulfamoyl, N-Methylsulfamoyl, N,N-Dimethylsulfamoyl, N,N-Diäthylsulfamoyl oder N-Methyl-N-cyclohexylsulfamoyl ist.

Gegenstand der Erfindung ist ferner ein Verfahren zur Herstellung der Monoazofarbstoffe der Formel (1). Das Verfahren ist dadurch gekennzeichnet, dass man eine Diazokomponente der Formel

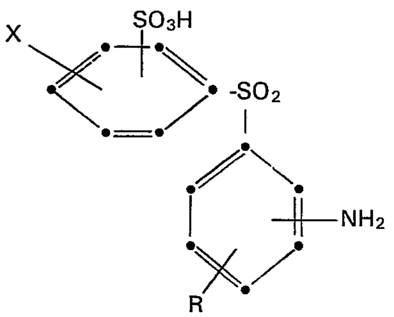

(3)

diazotiert und auf eine Kupplungskomponente der Formel

H - K (4)

kuppelt, wobei K, R und X in den Formeln (3) und (4) die unter Formel (1) angegebenen Bedeutungen haben.

Die Diazotierung der Diazokomponenten der Formel (3) erfolgt in der Regel durch Einwirkung salpetriger Säure in wässrig-mineralsaurer Lösung bei tiefer Temperatur, die Kupplung auf die Kupplungskomponente der Formel (4) bei sauren, neutralen bis alkalischen pH-Werten.

Gegebenenfalls kann eine freie Aminogruppe im Rest K nach der Kupplung mit einem Acylierungs- oder Alkylierungsmittel in eine Acylamino- oder Alkylaminogruppe umgewandelt werden, und ebenso kann eine Hydroxygruppe im Rest K durch Alkylierung in eine Alkoxygruppe übergeführt werden.

Die Azofarbstoffe der Formel (1), die einen faserreaktiven Rest enthalten, werden hergestellt, indem man eine Diazokomponente der Formel (3), eine Kupplungskomponente der Formel (4), die eine acylierbare Amino- oder Hydroxygruppe enthält, und ein Acylierungsmittel, das einen faserreaktiven Rest enthält, in beliebiger Reihenfolge miteinander umsetzt.

Vorzugsweise werden als Kupplungskomponenten, die eine acylierbare Gruppe enthalten, solche der Benzol- oder Naphthalinreihe verwendet.

Bevorzugte Verfahrensvarianten sind dadurch gekennzeichnet, dass man eine Diazokomponente der Formel (3) verwendet, worin

a) X in p-Stellung zur $-SO_2$-Gruppe an den Sulfophenylring gebunden ist;

b) R in o- oder p-Stellung zur $SO_2$-Gruppe an den Phenylring gebunden ist; und

c) worin die $NH_2$-Gruppe in o- oder p-Stellung zur $-SO_2$-Gruppe an den Phenylring gebunden ist.

Die bevorzugten Monoazofarbstoffe der Formel (1) werden hergestellt, indem man eine Diazokomponente der Formel (3), worin R Wasserstoff, Chlor, Methyl, Trifluormethyl, Carboxy oder eine $-SO_2$-$C_{1-2}$-Alkyl, $-SO_2$-Benzyl, 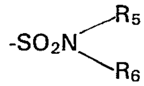 , 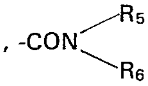 oder $-CO-R_7$-Gruppe ist, wobei $R_5$ Wasserstoff oder $C_{1-4}$-Alkyl, $R_6$ Wasserstoff, $C_{1-6}$-Alkyl, das durch Hydroxy oder Methoxy substituiert sein kann, oder Cyclohexyl und $R_7$ Phenyl oder Chlorphenyl bedeuten, und worin X Wasserstoff, Methyl, Chlor oder Äthoxy ist, diazotiert und auf eine Kupplungskomponente der Formel (4) kuppelt, worin K ein N-$C_{1-4}$-Alkylamino- oder N,N-Di-$C_{1-4}$-alkylaminobenzolrest, der im Benzolring durch Methyl, Methoxy, Chlor und Acetylamino substituiert sein kann, und worin die N-Alkylreste unabhängig voneinander durch Hydroxy, Chlor, Cyano oder Phenyl substituiert sein können, ein Methoxybenzolrest, der im Benzolring durch Methyl substituiert sein kann, ein Methoxynaphthalinrest, ein Hydroxynaphthalinrest, der durch Sulfo substituiert sein kann, ein Aminonaphtholrest, der im Naphthalinkern durch Sulfo substituiert sein kann, und worin die Aminogruppe durch Methyl, α,β-Dibrompropionyl, α,β-Dibrompropionylaminobenzoyl und 2,6-Difluor-5-chlorpyrimidylaminobenzoyl substituiert sein kann, ein 1-Phenyl-3-methylpyrazolonrest, der im Phenylrest durch Methyl, Äthyl und Chlor substituiert sein kann, ein 1-Phenyl-3-methylaminopyrazolrest, der im Phenylrest durch Chlor und Sulfo substituiert sein kann, ein 2-Methyl- oder 2-Phenylindolrest, der in 1-Stellung durch Äthyl substituiert sein kann, ein N-Methyl- oder N-Äthyl-1,2,3,4-tetrahydrochinolinrest oder ein 1-Chlorphenylamino-2-pentyl-naphthimidazolrest, der im Naphthalinkern durch Hydroxy und Sulfo substituiert ist.

Insbesondere verwendet man eine Kupplungskomponente der Formel (4), worin K ein N,N-Di-$C_{1-4}$-alkylaminobenzolrest, der im Benzolkern durch Methyl, Methoxy, Chlor und Acetylamino substituiert sein kann, und worin die N-Alkylreste unabhängig voneinander durch Hydroxy, Chlor, Cyano oder Phenyl substituiert sein können, ein 1-Phenyl-3-methylaminopyrazolrest, der im Phenylrest durch Chlor und Sulfo substituiert sein kann oder ein 2-Methyl- oder 2-Phenylindolrest, der in 1-Stellung durch Äthyl substituiert sein kann, ist.

Insbesondere verwendet man eine Diazokomponente der Formel

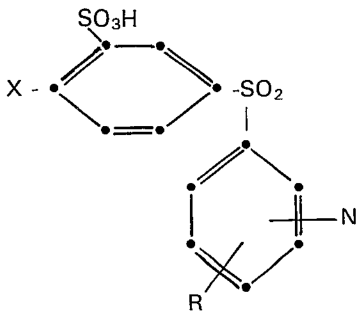

(5),

worin R und X die oben angegebenen Bedeutungen haben.

Die besonders bevorzugten Monoazofarbstoffe der Formel (1) werden hergestellt, indem man eine Diazokomponente der Formel (5), worin X Wasserstoff, Chlor oder Methyl und R Wasserstoff, Chlor, Trifluormethyl, Äthylsulfonyl, p-Chlorbenzoyl, Sulfamoyl, N-Methylsulfamoyl, N,N-Dimethylsulfamoyl, N,N-Diäthylsulfamoyl oder N-Methyl-N-cyclohexylsulfamoyl ist, diazotiert und auf eine Kupplungskomponente der Formel (4) kuppelt, worin K ein 2-Methyl- oder 2-Phenylindolrest, ein N,N-Diäthyl-3-acetylaminoanilinrest, ein N,N-Diäthyl- oder N,N-Dibutyl-3-methylanilinrest, ein N-Äthyl-N-phenäthyl-3-methylanilinrest oder ein 1-Phenyl-3-methylaminopyrazolrest ist.

Aus der grossen Zahl möglicher Kupplungskomponenten seien folgende als Beispiele genannt:
Anilin, Dimethylanilin, Diäthylanilin, 3-Methyl-dimethylanilin, 3-Methyldibutylanilin, 3-Methyl-diäthylanilin, 3-Acetylamino- oder 3-Methoxycarbonylamino- oder 3-Ureido-dimethylanilin, 3-Methyl-6-methoxy-diäthylanilin, 3-Methyl-N-äthyl-N-butyl-anilin, 2,5-Dimethoxy-diäthylanilin, N-Äthyl-N-benzylanilin, N-Äthyl-N-(β-cyanäthyl)-anilin, N-Äthyl-N-(β-hydroxyäthyl)-anilin, N-Äthyl-N-(β-acetoxyäthyl)-anilin, N,N-Dibutylanilin, 3-Acetylamino-N,N-diäthylanilin, N-Methyl-N-(β-cyanäthyl)-anilin, 3-Methyl-N,N-di-(β-cyanäthyl)-anilin, 3-Chlor-N,N-dimethylanilin, 3-Methyl-N-äthyl-N-benzylanilin, 3-Methyl-dipropylanilin, N,N-Di-n-propylanilin, 3-Acetylamino-N,N-di-(β-hydroxyäthyl)-anilin, 3-Methyl-N,N-di-(β-acetoxyäthyl)-anilin, 3-Methyl-N-äthyl-N-(3'-sulfobenzyl)-anilin, N-Äthyl-N-(β-chloräthyl)-anilin, 2-Methoxy-5-acetylamino-N-benzylanilin, 2-Methoxy-5-acetylamino-N-(β-acetoxyäthyl)-N-benzylanilin, 3-Methyl-N-äthyl-N-propylanilin, 3-Methyl-N-äthyl-N-(β-cyanäthyl- oder β-hydroxyäthyl)-anilin, 2-Methyl-5-acetylamino-N,N-dimethylanilin, 2-Chlor-5-acetylamino-N,N-dimethylanilin, 2-Chlor-5-acetylamino-N-(γ-phenoxy-β-hydroxy-n-propyl)-anilin, 3-Ureidoanilin, N-Äthyl-N-(β-hydroxyäthyl)-anilin, N-Äthyl-N-(3'-sulfobenzyl)-anilin, 3-Methyl-N-äthyl-N-(β-sulfoäthyl)-anilin, 3-Benzoylamino-N,N-diäthylanilin, 3-(p-Tolyl-sulfamoyl)-N,N-diäthylanilin, 3-(p-Chlorbenzoylamino)-N,N-diäthylanilin, 3-Methoxy-N,N-diäthylanilin, 3-Methyl-N,N-di-(β-hydroxyäthyl)-anilin, 3-Methyl-6-methoxy-N,N-di-(β-hydroxyäthyl)-anilin, 3-Acetylaminoanilin, 3-Methyl-N-äthyl-N-phenäthylanilin, N,N-Di-(β-cyanäthyl)-anilin, 3-Acetylamino-N,N-di-(β-cyanäthyl)-anilin, 3-Methyl-N-äthyl-N-(β-hydroxyäthyl)-anilin, 3-Methyl-N-äthyl-N-(β-cyanäthyl)-anilin, N-(β-Cyanäthyl)-anilin, N-Methyl-N-benzylanilin, Phenol, 3-Methylphenol, 3,4-Dimethylphenol, 2-Phenylphenol, 1-Hydroxy-4-methoxybenzol, 1-Hydroxy-4-tert.-butylbenzol, 1-Hydroxy-7-amino-3-sulfonaphthalin, 1-Hydroxy-7-methylamino- oder -7-phenylamino-3-sulfonaphthalin, β-Naphthol, 1-Hydroxy-8-amino-3,6- oder -3,5-disulfonaphthalin, 1-Hydroxy-8-benzoylamino-3,6- oder -3,5-disulfonaphthalin, 1-Hydroxy-8-ureido-3,6- oder -3,5-disulfonaphthalin, 1-Hydroxy-8-acetylamino-3,6- oder -3,5-disulfonaphthalin, 1-(3'-Chlorphenyl)-3-methylpyrazolon-5, 1-(2'-Chlor-6'-methylphenyl)-3-methylpyrazolon-5, 1-Phenyl-3-methylpyrazolon-5, 1-(2',3'- oder 4'-Sulfophenyl)-3-methylpyrazolon-5, 1-(2'-Chlor-4'- oder 5'-Sulfophenyl)-3-methylpyrazolon-5, 1-(3' oder 4'-α,β-Dibrompropionylamino)-benzoylamino-8-hydroxy-3,6- oder 4,6-disulfonaphthalin, 2-α,β-Dibrompropionylamino-8-hydroxy-6-sulfonaphthalin, 3-α-β-Dibrompropionyl-N-methyl-amino-8-hydroxy-6-sulfonaphthalin, 1-[3'-(2'',5''-Difluor-5''-chlorpyrimidylamino)-benzoylamino]-8-hydroxy-4,6-disulfonaphthalin, 1-(2'-Methyl-4'-sulfophenyl)-3-methylpyrazolon-5, 1-[4',8'-Disulfonaphthyl-(2)]-3-methylpyrazolon-5, 1-[5',7'-Disulfonaphthyl-(2)]-3-methylpyrazolon-5, 1-(2'-Chlor-5'-sulfophenyl)-3-methyl-5-aminopyrazol, 1-(2'-Chlor-4'-sulfophenyl)-3-methyl-5-aminopyrazol, 1-(3'- oder 4'-Sulfophenyl)-3-methyl-5-aminopyrazol, 2-Methylindol, 2-Phenylindol, 1-Methyl-2-phenylindol, 1-Octyl-2-methylindol, N-Methyl-N,N-diphenylamin, Acetessigsäureanilid, 1-(4'-Methylphenyl)-3-methylpyrazolon-5, 1-Äthyl-2-methylindol, 1-Phenyl-3-methyl-5-aminopyrazol, 1-Hydroxynaphthalin, 1-Hydroxy-4-sulfonaphthalin, 1-(2'-Chlorphenylamino)-9-hydroxy-2-methyl-1H-naphtho(1.2-d)imidazol-7-sulfonsäure, 1-(2'-Chlorphenylamino)-9-hydroxy-2-pentyl-1H-naphtho(1.2-d)imidazol-7-sulfonsäure, 1-(2-Methyl-6-chlorphenyl)-3-methylpyrazolon-5, N-Methyl- oder N-Äthyl-1,2,3,4-tetrahydrochinolin.

Die vorliegende Erfindung betrifft ebenfalls die als Diazokomponenten verwendeten Verbindungen der Formel

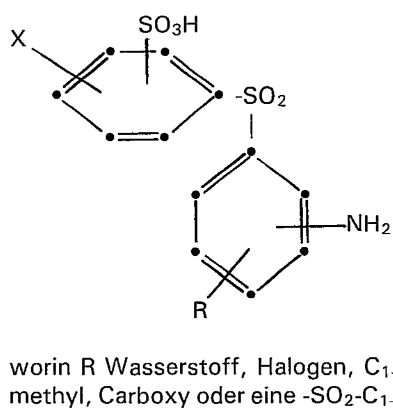

(3),

worin R Wasserstoff, Halogen, $C_{1-6}$-Alkyl, Trifluormethyl, Carboxy oder eine $-SO_2-C_{1-6}$-Alkyl, $-SO_2-R_1$,

$-SO_2N\begin{smallmatrix}R_2\\R_3\end{smallmatrix}$, $-CON\begin{smallmatrix}R_2\\R_3\end{smallmatrix}$ oder $-CO-R_4$-Gruppe ist,

wobei $R_1$ einen gegebenenfalls substituierten Benzyl-, Phenäthyl- oder Naphthylmethylenrest, $R_2$ und $R_3$ unabhängig voneinander Wasserstoff, $C_{1-6}$-Alkyl

oder $C_{5-7}$-Cycloalkyl und $R_4$ einen gegebenenfalls durch Halogen, $C_{1-4}$-Alkyl und $C_{1-4}$-Alkoxy substituierten Phenylrest bedeuten, und worin X Wasserstoff, $C_{1-4}$-Alkyl, $C_{1-4}$-Alkoxy oder Halogen bedeutet, wobei die Reste R und X nicht beide Wasserstoff oder in p-Stellung zur $-SO_2$-Gruppe nicht beide Chlor oder Methyl oder X in p-Stellung zur $-SO_2$-Gruppe nicht Chlor oder Methyl und R Wasserstoff oder R in p-Stellung zur $-SO_2$-Gruppe nicht Methylsulfonyl oder Carboxy und X Methyl sein dürfen, wenn die $NH_2$-Gruppe in o-Stellung zur $-SO_2$-Gruppe an den Phenylring gebunden ist.

Bevorzugt sind Verbindungen der Formel (3), worin

a) X in p-Stellung zur $-SO_2$-Gruppe an den Sulfophenylring gebunden ist;
b) R in o- oder p-Stellung zur $-SO_2$-Gruppe an den Phenylring gebunden ist; und
c) die $NH_2$-Gruppe in o- oder p-Stellung zur $-SO_2$-Gruppe an den Phenylring gebunden ist.

Besonders bevorzugt sind Verbindungen der Formel (3), worin R Wasserstoff, Chlor, Methyl, Trifluormethyl, Carboxy oder eine $-SO_2-C_{1-2}$-Alkyl, $-SO_2$-Benzyl, 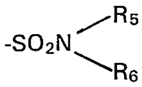 , 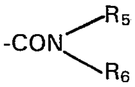 oder $-CO-R_7$-Gruppe ist, wobei $R_5$ Wasserstoff oder $C_{1-3}$-Alkyl, $R_6$ Wasserstoff, $C_{1-6}$-Alkyl, das durch Hydroxy oder Methoxy substituiert sein kann, oder Cyclohexyl und $R_7$ Phenyl oder Chlorphenyl bedeuten, und worin X Wasserstoff, Methyl, Chlor oder Äthoxy ist.

Insbesondere bevorzugt sind die Verbindungen der Formel

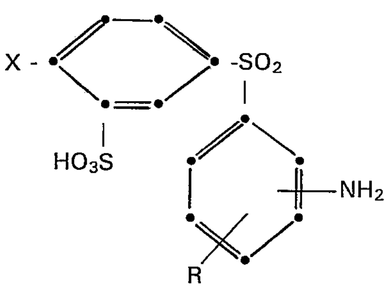

(5),

worin R und X die oben angegebenen Bedeutungen haben.

Die Verbindungen der Formel (3) werden hergestellt, indem man eine Verbindung der Formel

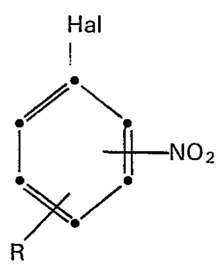

(6),

worin Hal Halogen bedeutet und R die unter Formel (3) angegebene Bedeutung hat, mit einer Verbindung der Formel

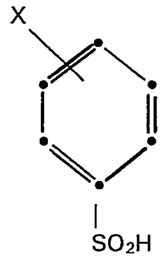

(7),

worin X die unter Formel (3) angegebene Bedeutung hat, umsetzt, das Reaktionsprodukt sulfiert und anschliessend die $NO_2$-Gruppe zur Aminogruppe reduziert.

Die Verbindungen der Formeln (6) und (7) sind an sich bekannt und können nach bekannten Methoden erhalten werden.

Nach einer Verfahrensvariante können die Verbindungen der Formel (3), worin X Wasserstoff oder Halogen und R eine 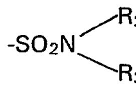 -Gruppe ist, wobei $R_2$ und $R_3$ unabhängig voneinander Wasserstoff, $C_{1-6}$-Alkyl oder $C_{5-7}$-Cycloalkyl bedeuten, erhalten werden, indem man eine Verbindung der Formel

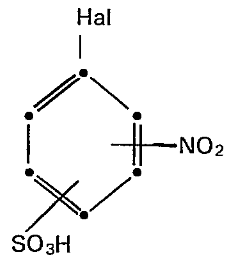

(8),

worin Hal Halogen bedeutet, mit einer Verbindung der Formel (7), worin X Wasserstoff oder Halogen ist, umsetzt, das Reaktionsprodukt in ein Sulfonsäurehalogenid überführt, anschliessend sulfiert und dann mit einem Amin der Formel

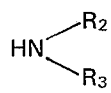

(9),

worin $R_2$ und $R_3$ die oben angegebenen Bedeutungen haben, umsetzt und anschliessend die $NO_2$-Gruppe zur Aminogruppe reduziert.

Die Verfahrensweisen zur Herstellung der Verbindungen der Formel (3) sind an sich bekannt. Die Umsetzungen erfolgen bei Temperaturen zwischen 0 und 150°C, gegebenenfalls unter Druck in wässriger Lösung oder Gemischen aus organischen Lösungsmitteln, wie z.B. Aceton und Wasser, und bei pH-Werten zwischen 7 und 10. Die Reduktion der Nitrogruppe erfolgt ebenfalls nach an sich bekannten Methoden, wie z.B. in Eisessig in Gegenwart von Eisenpulver. Die Einführung der Sulfonsäuregruppe erfolgt nach an sich bekannten Methoden, wie z.B. in 25%igem Oleum bei Temperaturen zwischen 0 und 100°C.

Die Umsetzung des Reaktionsproduktes der Verbindungen der Formeln (8) und (7) in das Sulfonsäurehalogenid, insbesondere Sulfochlorid, erfolgt

nach bekannten Methoden, beispielsweise durch Umsetzung der Sulfonsäure mit Phosphoroxychlorid in einem organischen Medium, wie z.B. Sulfolan oder Acetonitril.

Als Ausgangsverbindungen der Formel (6) seien beispielsweise genannt: 4-Chlor-3-nitrophenyläthylsulfon, 4-Chlor-3-nitrobenzol-1-sulfamid, 4-Chlor-3-nitrobenzoesäureamid, 1,2-Dichlor-3-nitrobenzol, 4,4'-Dichlor-3-nitrobenzophenon, p-Nitrochlorbenzol, 1,4-Dichlor-2-nitrobenzol, o-Nitrochlorbenzol, 4-Chlor-3-nitrobenzolsulfonsäure-N,N-dimethylamid, 4-Chlor-3-nitrobenzol-1-sulfonsäure-N-methylamid, 4-Chlor-3-nitrobenzol-1-sulfonsäure-N,N-diäthylamid, 4-Chlor-3-nitrobenzol-1-sulfonsäure-N-äthyl-, -propyl-, -isopropyl-, -butyl-, -sek.-butyl-, -isobutyl-, -tert.-butyl-, -pentyl-, -hexyl- oder -cyclohexylamid, 4-Chlor-3-nitrobenzol-1-sulfonsäure-N-methyl-N-cyclohexylamid, 4-Chlor-3-nitrobenzol-1-sulfonsäure-N-β-hydroxyäthyl- oder -β-methoxyäthyl-amid, 4-Chlor-3-nitrobenzol-1-sulfonsäure-N-methyl-N-β-hydroxyäthylamid, 4-Chlor-3-nitrobenzoesäure-N-methyl-, -äthyl-, -propyl- oder -butyl-amid, 4-Chlor-3-nitrobenzoesäure-N,N-dimethyl-, -äthyl-, -propyl- oder -isopropyl-amid, 4-Chlor-3-nitrobenzoesäure-N-methyl-N-cyclohexyl-amid, 4-Chlor-3-nitrophenylbenzylsulfon, 4-Chlor-3-nitrophenylmethylsulfon, 4-Chlor-3-nitrobenzophenon, 4-Chlor-3-nitro-1-trifluormethylbenzol, 4-Chlor-3-nitrotoluol, 4-Chlor-3-nitrobenzoesäure.

Als Ausgangsverbindungen der Formel (7) seien beispielsweise genannt: Benzolsulfinsäure, 4-Methylbenzolsulfinsäure, 4-Äthoxybenzolsulfinsäure, 4-Chlorbenzolsulfinsäure.

Als Ausgangsverbindungen der Formel (8) seien beispielsweise genannt: 4-Chlor-3-nitrobenzolsulfonsäure, 2-Chlor-5-nitrobenzolsulfonsäure.

Als Ausgangsverbindungen der Formel (9) seien beispielsweise genannt: Ammoniak, Dimethylamin, Methylamin, Diäthylamin, Äthylamin, Propylamin, N-Methyl-N-cyclohexylamin.

Als Beispiele für die Verbindungen der Formel (3) seien genannt: 2-Amino-4-äthylsulfonyl-1,1'-diphenylsulfon-3'-sulfonsäure, 2-Amino-4'-chlor-4-äthylsulfon-1,1'-diphenylsulfon-3'-sulfonsäure, 2-Amino-4'-methyl-4-sulfonsäureamid-1,1'-diphenylsulfon-3'-sulfonsäure, 2-Amino-4'-methyl-4-carbonamid-1,1'-diphenylsulfon-3'-sulfonsäure, 2-Amino-4'-methyl-6-chlor-1,1'-diphenylsulfon-3'-sulfonsäure, 2-Amino-4'-methyl-4-p-chlorbenzoyl-1,1'-diphenylsulfon-3'-sulfonsäure, 4-Amino-4'-methyl-1,1'-diphenylsulfon-3'-sulfonsäure, 2-Amino-4'-methyl-4-chlor-1,1'-diphenylsulfon-3'-sulfonsäure, 2-Amino-4'-chlor-1,1'-diphenylsulfon-3'-sulfonsäure, 2-Amino-4'-methyl-4-sulfonsäure-N,N-dimethyl-, -äthyl-, -propyl-, -isopropyl- oder -butylamid-1,1'-diphenylsulfon-3'-sulfonsäure, 2-Amino-4'-methyl- oder -4'-chlor-4-sulfonsäure-N -methyl-, -äthyl-, -β-hydroxyäthyl-, -β-methoxyäthyl-, -propyl-, -isopropyl-, -butyl-, -sec.-butyl-, -isobutyl-, -tert.-butyl-, -pentyl-, -hexyl- oder -cyclohexyl-amid-1,1'-diphenyl-sulfon-3'-sulfonsäure, 2-Amino-4-sulfonsäure-N-methyl-, -äthyl-, -propyl-, -isopropyl-, -butyl-, -sec.-butyl-, -isobutyl-, -tert.-butyl-, -pentyl-, -hexyl- oder -cyclohexyl-amid-1,1'-diphenylsulfon-3'-sulfonsäure, 2-Amino-4-sulfonsäure-N-methyl-N-cyclohexylamid-1,1'-diphenylsulfon-3'-sulfonsäure, 2-Amino-4'-methyl-4-sulfonsäure-N-methyl-N-cyclohexylamid-1,1'-diphenylsulfon-3'-sulfonsäure, 2-Amino-4-carbonamid-1,1'-diphenylsulfon-3'-sulfonsäure, 2-Amino-4'-methyl- oder -4'-chlor-4-methyl-, -äthyl- oder -benzylsulfon-1,1'-diphenylsulfon-3'-sulfonsäure, 2-Amino-4'-chlor- oder -4'-methyl-4-benzoyl- oder -4-p-chlorbenzoyl-1,1'-diphenylsulfon-3'-sulfonsäure, 2-Amino-4'-methyl- oder -4'-chlor-4-trifluormethyl-1,1'-diphenylsulfon-3'-sulfonsäure, 2-Amino-4,4'-dichlor-1,1'-diphenylsulfon-3'-sulfonsäure, 2-Amino-4'-methyl-4-carboxy-1,1'-diphenylsulfon-3'-sulfonsäure, 2-Amino-4,4'-dimethyl-1,1'-diphenylsulfon-3'-sulfonsäure, 2-Amino-4-trifluormethyl-1,1'-diphenylsulfon-3'-sulfonsäure.

Die erfindungsgemässen Farbstoffe der Formel (1) liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die Farbstoffe der Formel (1) eignen sich zum Färben und Bedrucken von Amidgruppen enthaltenden Materialien, wie Textilfasern, Textilfäden und -geweben aus Wolle, Seide und Polyurethanfasern, insbesondere aber zum Färben und Bedrucken von synthetischem Polyamid, wobei die üblichen Färbeverfahren angewendet werden und egale Färbungen erhalten werden.

Sie zeichnen sich aus durch Brillanz und Farbstärke, gutes Auszieh- und sehr gutes Aufbauvermögen. Die Färbungen zeichnen sich aus durch allgemein gute Echtheiten, wie Reibechtheit, Säure- und Alkaliechtheit, Nassechtheiten, insbesondere Wasch-, Wasser-, Heisswasser- und Schweissechtheit. Insbesondere hervorzuheben ist die sehr gute Lichtechtheit und die sehr gute Beständigkeit gegenüber Formaldehyd.

Aus der CH-A-360.448 und der FR-A-871.73i sind ähnliche Monoazofarbstoffe bekannt, die jedoch nicht alle guten Eigenschaften der erfindungsgemässen Monoazofarbstoffe aufweisen.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

*Beispiel 1*

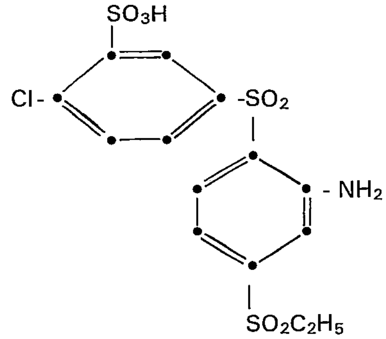

149,1 g 4-Chlor-3-nitro-phenyl-äthylsulfon feucht (50,2%ig) werden zusammen mit 86,7 g 4-Chlorbenzolsulfinsäure Na-Salz (68,8%ig) in je 150 ml Methanol und Dimethylsulfoxyd während 5 Stunden bei 68-72° verrührt. Das bei Raumtemperatur abfiltrierte, mit Methanol und Wasser gewaschene Produkt wird im Vacuumschrank bei 60-70° getrocknet. Smp. 215-218°.

109 g der erhaltenen Verbindung werden in 250 ml Oleum 25%ig innerhalb von ca. 5 Stunden bei 65-68° sulfiert. Die auf Eis ausgefällte Masse wird filtriert, in Wasser verrührt und mit Natronlauge konz. bei pH 7 in Lösung gebracht. Nach Zugabe von Kochsalz wird abgenutscht. Der feuchte Filterkuchen wird in 200 ml Wasser enthaltend 50 g Eisenpulver und 3 ml Eisessig eingetragen und während 20 Min. bei Siedetemperatur nachgerührt. Nach vorsichtiger Zugabe von 5 g Soda wird vom Eisenrückstand abfiltriert. Das Filtrat wird mit konzentrierter Kochsalzlösung verdünnt und die entstehende Ausfällung nach der Filtration mit Kochsalzlösung gewaschen und im Vacuumschrank bei 60-70° getrocknet.
Man erhält 102 g hellgraues Pulver.

*Beispiel 2*

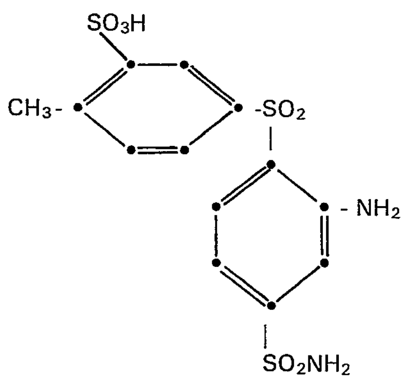

70,95 g 4-Chlor-3-nitrobenzol-1-sulfamid, 58,65 g Toluol-4-sulfinsäure Na-Salz (95,6%ig) und 12,3 g Natriumacetat calc. werden in 150 ml Dimethylsulfoxyd 21/2 Stunden bei 40-45° verrührt. Man verdünnt mit 375 ml Alkohol und 750 ml Wasser und nutscht das ausgefallene Produkt ab. Mit heissem Wasser gewaschen wird der Filterkuchen im Vacuumschrank bei 60-70° getrocknet. Smp. 181-185°.

101 g der erhaltenen Verbindung werden in 275 ml 25%iges Oleum eingetragen und die entstehende Lösung 4 Stunden nachgerührt. Der Sulfokörper wird durch Austragen auf Eis und Zugabe von Kochsalz ausgefällt, filtriert und mit Kochsalzlösung gewaschen.

Der feuchte Nutschkuchen wird in 300 ml Wasser enthaltend 40 g Eisenpulver und 4 ml Eisessig eingetragen und während 20 Min. bei Siedetemperatur der Reduktion ausgesetzt. Nach vorsichtiger Zugabe von 60 ml Sodalösung 1-molar wird vom Eisenrückstand abfiltriert und das Amin durch Versetzen mit Kochsalz ausgefällt. Nach der Filtration und Trocknung erhält man 103,7 g chromatographisch reines Produkt der oben formulierten Verbindung.

*Beispiel 3*

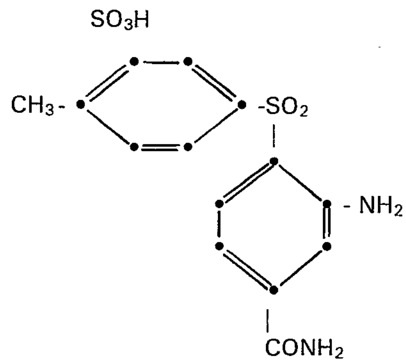

61,8 g 4-Chlor-3-nitrobenzoesäure (98%ig), 65,9 g Toluol-4-sulfinsäure (89,3%ig) und 24,6 g Natriumacetat calc. werden in 150 ml Dimethylsulfoxyd unter Rühren auf 115° erwärmt. Nach 1 Stunde wird die Reaktionsmasse auf kaltes Wasser ausgetragen und mit Salzsäure konzentriert kongosauer gestellt. Der filtrierte und mit Wasser gewaschene Rückstand wird im Vakuumschrank bei 60-75° getrocknet. Man erhält 94,5 g Pulver.

72,1 g dieser Verbindung werden in 300 ml Chloroform und 2 ml Dimethylformamid bei Siedetemperatur mit 21,7 ml Thionylchlorid zum Carbonsäurechlorid umgesetzt. Die klare Lösung wird mit 300 ml Petroläther verdünnt und der entstandene Niederschlag abfiltriert und kurz getrocknet. Man erhält 72,8 g Säurechlorid. Schmelzpunkt: 162-164°. Davon werden 37,4 g in 100 ml Ammoniaklösung konzentriert eingetragen und bei Raumtemperatur 3 Stunden nachgerührt. Das Amid wird filtriert, mit Wasser gewaschen und im Vacuum bei 60-70° getrocknet. Man erhält 35 g Pulver mit einem Smp. von 227-230°. 33,8 g des Amids werden in 90 ml Oleum 25 Stunden bei Raumtemperatur sulfiert. Die Lösung wird auf Eis ausgetragen und das Produkt mit Kaliumchlorid ausgefällt. Der filtrierte und mit Kochsalzlösung gewaschene Niederschlag ergibt nach der Trocknung 46,8 g graues Pulver.

45,8 g des Nitrokörpers werden in 200 ml Wasser enthaltend 20 g Eisenpulver und 2 ml Eisessig eingetragen und unter Rühren während 15 Minuten bei Siedetemperatur belassen. Nach vorsichtiger Zugabe von 30 ml Sodalösung 1 molar wird vom Eisenrückstand abfiltriert. Das oben formulierte Produkt wird mit Kochsalz ausgefällt und filtriert. Anschliessend wird der mit Kochsalzlösung gewaschene Filterrückstand im Vacuumschrank bei 60-70° getrocknet.
Die Ausbeute beträgt 38,7 g.

*Beispiel 4*

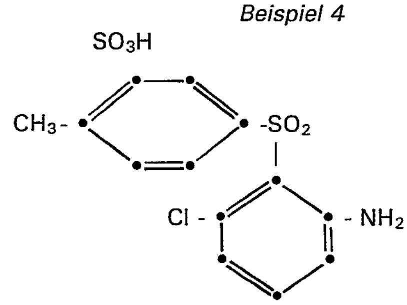

57,6 g 1,2-Dichlor-3-nitrobenzol und 55,8 g Toluol-4-sulfinsäure Na-Salz (95,6%ig) werden in 150 ml Dimethylsulfoxyd bei 65-70° verrührt bis sich eine gelbe, salzhaltige Lösung gebildet hat. Man verdünnt mit 150 ml Alkohol und 500 ml Wasser. Die filtrierte und gewaschene Ausfällung wird im Vacuum bei 60-70° getrocknet.

Man erhält 81,3 g Pulver mit einem Smp. von 132-138°. 80,2 g dieses Pulvers werden in 206 ml Oleum (25%ig) sulfiert. Die auf Eis ausgefällte Masse wird filtriert und anschliessend in Wasser mit Natronlauge konzentriert neutralisiert. Das abgesaugte und bei 60-70° im Vacuum getrocknete Produkt ergibt eine Ausbeute von 99,3 g.

Das Nitroprodukt wird in 300 ml Wasser enthaltend 50 g Eisenpulver und 3 ml Eisessig eingetragen und 30 Minuten bis Siedetemperatur nachgerührt. Nach vorsichtigem Einstreuen von 4,7 g Soda wird vom Eisenrückstand abfiltriert. Das oben formulierte Endprodukt wird durch Kochsalzzugabe zur Ausfällung gebracht, durch Filtration in chromatographisch reiner Form isoliert und im Vacuum bis 60-70° getrocknet. Die Ausbeute beträgt 96,7 g.

*Beispiel 5*

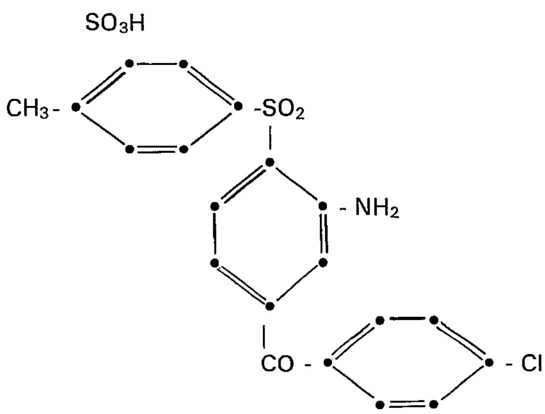

201,5 g 4-Chlor-3-nitrobenzoesäure werden in 600 ml Chlorbenzol mit 100 ml Thionylchlorid und katalytischer Menge Dimethylformamid zum Carbonsäurechlorid umgesetzt. In die erhaltene und auf 400 ml eingeengte Lösung werden 175 g Aluminiumchlorid eingetragen und allmählich auf 75° erwärmt bis kein Salzsäuregas mehr entweicht. Man versetzt vorsichtig mit Eiswasser und Salzsäure konzentriert, trennt die organische Phase ab und wäscht diese gründlich mit Wasser und Sodalösung. Nach dem Verdampfen des Lösungsmittels wird der Rückstand mit Methanol umkristallisiert. Man erhält 183 g einer Verbindung auf dem Smp. 83-85°.

Davon werden 74 g mit 57,1 g Toluol-4-sulfinsäure-Na-Salz (92,7%ig) in 100 ml Dimethylsulfoxyd bei 60° zum Sulfonderivat umgesetzt. Das auf Wasser ausgetragene Produkt wird filtriert, gewaschen und im Vacuum bei 60-70° getrocknet. Smp. 191-194°. 103 g der erhaltenen Verbindung werden in 215 ml Oleum (25%ig) sulfiert. Das mit Eis zur Ausfällung gebrachte Produkt wird filtriert, gewaschen und im Vacuum bei 60-70° getrocknet. 125 g des Nitrokörpers werden in 400 ml Wasser enthaltend 40 g Eisenpulver und 4 ml Eisessig eingetragen und während 30 Minuten bei Siedetemperatur nachgerührt. Nach vorsichtiger Zugabe von 5,2 g Soda wird vom Eisenrückstand abfiltriert. Der beim Abkühlen anfallende Niederschlag wird filtriert, gewaschen und im Vacuum bei 60-70° getrocknet.
Man erhält 92,9 g chromatographisch reine Substanz.

*Beispiel 6*

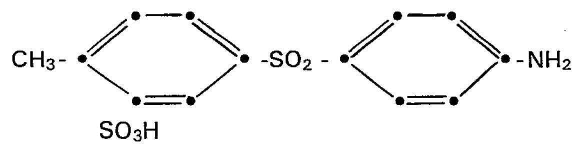

68,04 g p-Nitrochlorbenzol und 107,5 g Toluol--4-sulfinsäure Na-Salz (89,3%ig) werden in 145 ml Dimethylsulfoxyd homogen verrührt und während 8 Stunden bei 80° belassen. Man verdünnt mit Wasser und trocknet die filtrierte und mit Wasser gewaschene Ausfällung im Vacuumschrank bei 60-70°. Man erhält 111,6 g eines Pulvers mit dem Smp. von 161-167°. 110,4 g dieser Verbindung werden in 336 ml Oleum (25%ig) während 4 1/2 Stunden bei Raumtemperatur sulfiert. Das Produkt wird durch Austragen auf Eis und Zugabe von Kochsalz ausgefällt. Der filtrierte und mit Kochsalzlösung gewaschene Niederschlag ergibt nach der Trocknung 267,5 g Pulver.

260,4 g des Nitrokörpers werden in 510 ml Wasser enthaltend 80 g Eisenpulver und 5 ml Eisessig während 1/2 Stunden bei Siedetemperatur reduziert. Nach vorsichtiger Zugabe von 8,5 g Soda wird vom Eisenrückstand abfiltriert. Auf Zugabe von konzentrierter Salzsäure entsteht im Filtrat eine Ausfällung welche filtriert, mit Wasser gewaschen und im Vacuum bei 60-70° getrocknet wird. Die Ausbeute der oben formulierten Verbindung beträgt 114,3 g.

*Beispiel 7*

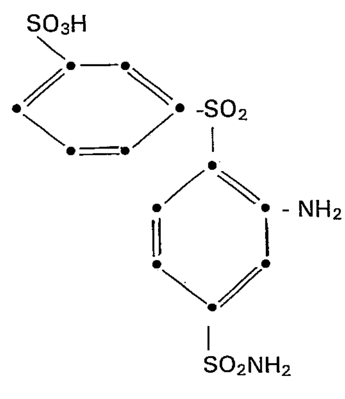

36,5 g 2-Nitro-diphenylsulfon-4-sulfonsäure Na--Salz werden in je 50 ml Sulfolan und Acetonitril mit 36,5 g Phosphoroxychlorid bei 68-72° zum Sulfonsäurechlorid umgesetzt. Die auf Eiswasser ausgefällte Masse wird filtriert und mit Wasser neutral gewaschen, dann über $P_2O_5$ getrocknet. Smp. 157-159°.

29,8 g des Säurechlorids werden in 58 ml Oleum 25 Stunden bei 20-37° sulfiert. Das auf Eis unter

Kochsalzzusatz ausgefällte Produkt wird nach der Filtration mit Kochsalzlösung neutral gewaschen.

Das Nutschgut wird bei 0-5° in 125 ml Ammoniak konz. zum Amid umgesetzt, filtriert und mit Kochsalzlösung gewaschen.

Der feuchte Filterkuchen wird in 100 ml Wasser enthaltend 15 g Eisenpulver und 1,5 ml Eisessig eingetragen und während 20 Minuten bei Siedetemperatur nachgerührt. Nach vorsichtiger Zugabe von 2,7 g Soda wird vom Eisenrückstand abfiltriert. Das mit Kaliumchlorid ausgefällte Produkt wird nach dem Filtrieren und Waschen im Vakuumschrank bei 60-70° getrocknet.

*Beispiel 8*

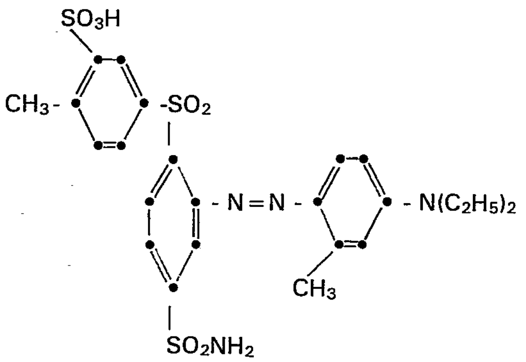

6,1 g der Verbindung aus Beispiel 2 (66,6%ig) verrührt man in 40 ml Wasser, 10 g Eis und 2,5 ml Salzsäure konzentriert und diazotiert bei 10-18° mit 2,5 ml Natriumnitrit 4n. Nach einiger Zeit wird ein schwacher Nitritüberschuss mit Sulfaminsäure zerstört. Man stellt eine Lösung von 1,63 g N,N-Diäthyl-m-toluidin in 15 ml Wasser und 1,5 ml Salzsäure konzentriert her und giesst diese zur Suspension des Diazoniumsalzes. Durch Zugabe von Natronlauge 2n wird auf pH 3,5 gestellt und der ausgefallene Farbstoff abfiltriert. Nach Aufnahme in 100 ml Wasser wird der Farbstoff unter Zusatz von Natronlauge 2n alkalisch gelöst und mit Kochsalz wieder ausgefällt. Man filtriert und trocknet den mit Kochsalzlösung gewaschenen Farbstoff im Vacuum bei 60-70°.

Man erhält 5,15 g Farbstoff, der aus schwach saurem Bad auf Polyamidmaterial gefärbt, brillante rote Töne ergibt. Der Farbstoff verfügt über eine sehr gute Lichtechtheit, gute Formaldehydbeständigkeit und Nassechtheiten.

*Beispiel 9*

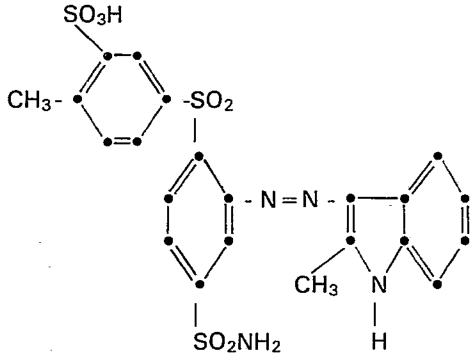

7,23 g 2-Amino-4-chlor-diphenylsulfon-4'-methyl-3'-sulfonsäure, in Analogie zu den Beispielen 1-7 hergestellt, werden in 80 ml Wasser, 20 g Eis und 5 ml Salzsäure konzentriert verrührt und bei 8-14° mit 5 ml Natriumnitrit 4n diazotiert. Nach einiger Zeit wird ein geringer Nitritüberschuss mit Sulfaminsäure zerstört. Man lässt eine Lösung von 2,62 g 2-Methylindol in 5 ml Salzsäure konzentriert zutropfen und führt die Kupplung bei pH 4 mit Natriumacetat gepuffert zu Ende. Der warm filtrierte Farbstoff wird mit Wasser gewaschen und im Vacuumschrank bei 60-70° getrocknet. Man erhält 8,65 g Farbstoff welcher unter Zusatz von Soda gut wasserlöslich ist und Polyamidmaterial aus schwach saurem Bad in brillanter rotstichig-gelber Nuance färbt. Der Farbstoff verfügt über eine sehr gute Lichtechtheit und Säurestabilität sowie gute Nassechtheiten.

*Beispiel 10*

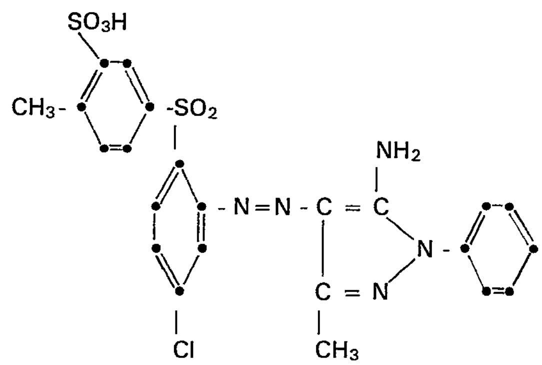

7,23 g 2-Amino-4-chlor-diphenylsulfon-4'-methyl-3'-sulfonsäure diazotiert man wie in Beispiel 9. Danach gibt man zur Diazolösung die Lösung von 3,59 g 3-Methyl-1-phenyl-5-pyrazolimin in 30 ml Wasser und 2,5 ml Salzsäure konzentriert und lässt bei Raumtemperatur auskuppeln. Der filtrierte Farbstoff wird in 100 ml Wasser mit Natronlauge 2n bis pH 7 in Lösung gebracht und mit Kochsalz wieder ausgefällt. Es wird abgesaugt und im Vacuum bei 60-70° getrocknet.

Man erhält 9,35 g Farbstoff, der aus schwach saurem Bad gefärbt, auf Polyamidmaterial brillante gelbe Töne ergibt. Der Farbstoff verfügt über eine sehr gute Lichtechtheit, gute Formaldehydbeständigkeit und Nassechtheiten.

*Beispiel 11*

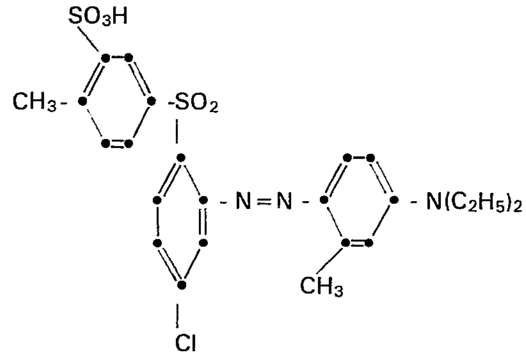

7,23 g 2-Amino-4-chlor-diphenylsulfon-4'-methyl-3'-sulfonsäure diazotiert man wie in Beispiel 9. Danach gibt man zur Diazolösung die salzsaure Lösung von 3,26 g N,N-Diäthyl-m-toluidin und vervollständigt die Kupplung durch Zusatz von Natriumacetat. Der in Wasser bei pH 7 gelöste Farbstoff wird mit Kochsalz ausgefällt, abgesaugt und im Vacuum bei 60-70° getrocknet.

Man erhält 8,8 g Farbstoff, der aus schwach saurem Bad gefärbt, auf Polyamidmaterial brillante rote Töne ergibt. Der Farbstoff verfügt über ein hervorragendes Aufbauvermögen, sehr gute Lichtechtheit, Formaldehydbeständigkeit und Nassechtheiten.

*Beispiel 12*

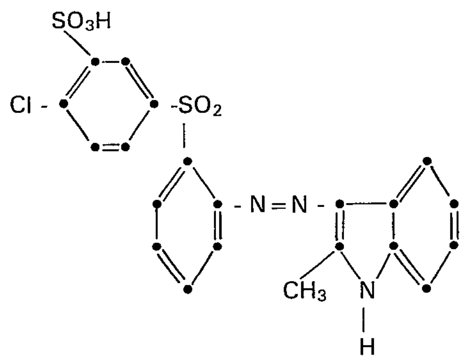

8,14 g 2-Amino-4'-chlor-diphenylsulfon-3'-sulfonsäure (85,4%ig) hergestellt analog den Beispielen 1-7, werden in 150 ml Wasser und 5 ml Salzsäure konzentriert bei 12-15° mit 5 ml Natriumnitrit 4n diazotiert. Man lässt die sich bildende Suspension etwas nachrühren und zerstört einen geringen Nitritüberschuss mit Sulfaminsäure. Nun tropft man 2,62 g 2-Methylindol in konzentrierte Salzsäure gelöst hinzu und lässt bei Raumtemperatur auskuppeln. Der abgesaugte Farbstoff wird in warmem Wasser bei pH 7 gelöst und mit Kaliumchlorid ausgesalzen. Man filtriert und trocknet den gewaschenen Niederschlag im Vacuum bei 60-70° und erhält 9,95 g Farbstoff.

Der Farbstoff färbt Polyamidmaterial aus schwach saurem Bad in brillanten, rotstichig gelben Tönen. Der Farbstoff verfügt über eine hervorragende Lichtechtheit, gute Säurestabilität, Formaldehydbeständigkeit und Nassechtheiten.

*Beispiel 13*

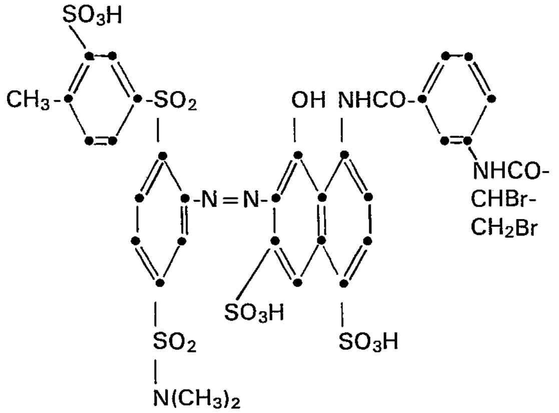

11,54 g 2-Amino-4-dimethylamidosulfon-4'-methyl-diphenylsulfon-3'-sulfonsäure (75,2%ig), analog den Beispielen 1-7 hergestellt, werden in 70 ml Wasser und 5 ml Salzsäure konzentriert mit 5 ml Natriumnitrit 4n bei 25-28° diazotiert. Nach einiger Zeit wird ein geringer Nitritüberschuss mit Sulfaminsäure zerstört.

23,66 g 3-α,β-Dibrompropionylaminobenzoyl-K--säure (55,1%ig) löst man in 100 ml Wasser bei pH 7 und kühlt ab auf 2°. Man fügt die Diazosuspension tropfenweise hinzu und hält den pH-Wert mit Natronlauge bei pH 7 konstant. Der Farbstoff wird mit Kaliumchlorid ausgesalzen, abgesaugt und im Vacuum bei 60-70° getrocknet. Man erhält 18,71 g.

Wenn man wie in den Beispielen 1 bis 13 verfährt, jedoch als Diazokomponente eine Verbindung der Formel

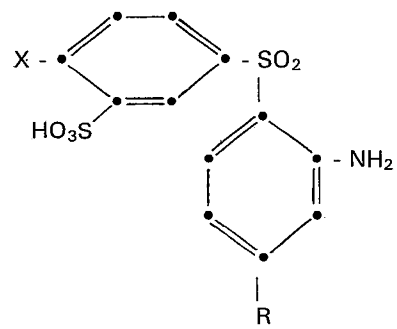

worin R und X die in der folgenden Tabelle angegebenen Bedeutungen haben, und als Kupplungskomponente die in der folgenden Tabelle aufgeführten Verbindungen einsetzt, so erhält man ebenfalls wertvolle Farbstoffe mit ähnlich guten Eigenschaften, die Polyamid und Wolle in der angegebenen Nuance anfärben.

Die nachfolgend mit * bezeichneten Beispiele werden erhalten, indem man auf die entsprechende Hydroxyverbindung kuppelt und die Hydroxygruppe anschliessend veräthert.

*Tabelle 1*

| Beispiel | Diazokomponente X | R | Kupplungskomponente | Nuance auf Polyamid |
|---|---|---|---|---|
| 1 | $-H$ | $-SO_2NH_2$ | 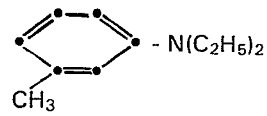 | rot |
| 2 | $-OC_2H_5$ | dto. | dto. | dto. |
| 3 | $-CH_3$ | $-SO_2NHCH_3$ | dto. | dto. |
| 4 | $-H$ | dto. | dto. | dto. |
| 5 | $-CH_3$ | $-SO_2N(CH_3)_2$ | dto. | dto. |
| 6 | $-H$ | dto. | dto. | dto. |
| 7 | $-CH_3$ | $-SO_2NHC_2H_5$ | dto. | dto. |
| 8 | $-H$ | dto. | dto. | dto. |
| 9 | $-CH_3$ | $-SO_2N(C_2H_5)_2$ | dto. | dto. |
| 10 | $-H$ | dto. | dto. | dto. |
| 11 | $-CH_3$ | $-SO_2NHC_3H_7$ | dto. | dto. |
| 12 | $-H$ | dto. | dto. | dto. |
| 13 | $-CH_3$ | $-SO_2N(C_3H_7)_2$ | dto. | dto. |
| 14 | $-H$ | dto. | dto. | dto. |
| 15 | $-CH_3$ | $-SO_2NHCH(CH_3)_2$ | dto. | dto. |
| 16 | $-H$ | dto. | dto. | dto. |
| 17 | $-CH_3$ | $-SO_2NHC_4H_9$ | dto. | dto. |
| 18 | $-H$ | dto. | dto. | dto. |
| 19 | $-CH_3$ | $-SO_2NH-C(CH_3)_3$ | dto. | dto. |
| 20 | $-H$ | dto. | dto. | dto. |
| 21 | $-CH_3$ | $-SO_2NHCH_2CH(CH_3)_2$ | dto. | dto. |
| 22 | $-H$ | dto. | dto. | dto. |
| 23 | $-CH_3$ | $-SO_2NHCH_2(CH_2)_3CH_3$ | dto. | dto. |
| 24 | $-H$ | dto. | dto. | dto. |
| 25 | $-CH_3$ | $-SO_2NHCH_2(CH_2)_4CH_3$ | dto. | dto. |
| 26 | $-H$ | dto. | dto. | dto. |
| 27 | $-CH_3$ | 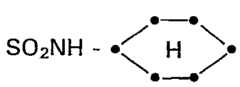 | dto. | dto. |
| 28 | $-H$ | dto. | dto. | dto. |
| 29 | $-CH_3$ | 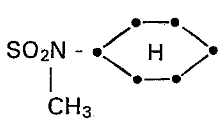 | dto. | dto. |
| 30 | $-H$ | dto. | dto. | dto. |
| 31 | $-CH_3$ | $-SO_2NHCH_2CH_2OH$ | dto. | dto. |
| 32 | $-H$ | dto. | dto. | dto. |
| 33 | $-CH_3$ | 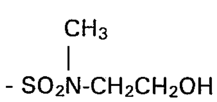 | dto. | dto. |

*Tabelle 1 (Fortsetzung)*

| Beispiel | Diazokomponente X | R | Kupplungskomponente | Nuance auf Polyamid |
|---|---|---|---|---|
| 34 | - H | $CH_3$<br>\|<br>$- SO_2N-CH_2CH_2OH$ | 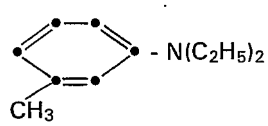 | rot |
| 35 | $- CH_3$ | $- SO_2NHCH_2CH_2OCH_3$ | dto. | dto. |
| 36 | - H | dto. | dto. | dto. |
| 37 | $- CH_3$ | $- CONH_2$ | dto. | gelbstichig rot |
| 38 | - H | dto. | dto. | dto. |
| 39 | $- CH_3$ | $- CON(CH_3)_2$ | dto. | dto. |
| 40 | $- CH_3$ | $- CONHC_2H_5$ | dto. | dto. |
| 41 | $- CH_3$ | $- CON(C_2H_5)_2$ | dto. | dto. |
| 42 | $- CH_3$ | $CH_3$<br>\|<br>- CON - 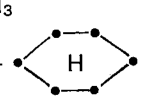 | dto. | dto. |
| 43 | $- CH_3$ | $- SO_2C_2H_5$ | dto. | rot |
| 44 | - H | dto. | dto. | dto. |
| 45 | - Cl | dto. | dto. | dto. |
| 46 | - Cl | $- SO_2CH_2$ - 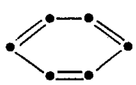 | dto. | dto. |
| 47 | - H | dto. | dto. | dto. |
| 48 | $- CH_3$ | dto. | dto. | dto. |
| 49 | dto. | $- SO_2CH_3$ | dto. | dto. |
| 50 | - H | dto. | dto. | dto. |
| 51 | Cl | dto. | dto. | dto. |
| 52 | $- CH_3$ | - CO - 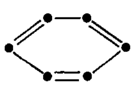 | dto. | dto. |
| 53 | dto. | - CO - 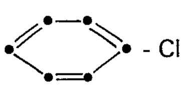 | dto. | dto. |
| 54 | - H | - Cl | dto. | dto. |
| 55 | - Cl | dto. | dto. | dto. |
| 56 | $- CH_3$ | $- CF_3$ | dto. | dto. |
| 57 | - H | dto. | dto. | dto. |
| 58 | - Cl | dto. | dto. | dto. |
| 59 | $- CH_3$ | $- CH_3$ | dto. | dto. |
| 60 | $- CH_3$ | - COOH | dto. | dto. |
| 61 | $- CH_3$ | $- SO_2NH_2$ | 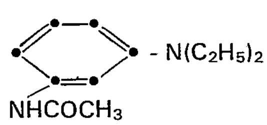 | dto. |
| 62 | - H | dto. | dto. | dto. |
| 63 | $- CH_3$ | $- SO_2NHCH_3$ | dto. | dto. |
| 64 | - H | dto. | dto. | dto. |

*Tabelle 1 (Fortsetzung)*

| Bei-spiel | Diazokomponente X | R | Kupplungskomponente | Nuance auf Polyamid |
|---|---|---|---|---|
| 65 | - $CH_3$ | - $SO_2N(CH_3)_2$ | 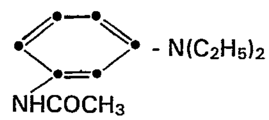 | rot |
| 66 | - H | dto. | dto. | dto. |
| 67 | - $CH_3$ | - $SO_2N(C_2H_5)_2$ | dto. | dto. |
| 68 | dto. | - $CONH_2$ | dto. | gelbstichig rot |
| 69 | dto. | - $CON(C_2H_5)_2$ | dto. | dto. |
| 70 | dto. | - $SO_2CH_3$ | dto. | rot |
| 71 | dto. | - $SO_2C_2H_5$ | dto. | dto. |
| 72 | - Cl | dto. | dto. | dto. |
| 73 | - $CH_3$ | - Cl | dto. | dto. |
| 74 | dto. | - $SO_2NH_2$ | 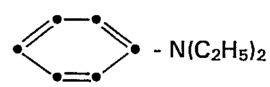 | gelbstichig rot |
| 75 | dto. | - $SO_2N(C_2H_5)_2$ | dto. | dto. |
| 76 | - Cl | - $SO_2C_2H_5$ | dto. | dto. |
| 77 | - $CH_3$ | - $CF_3$ | dto. | dto. |
| 78 | dto. | - Cl | dto. | dto. |
| 79 | dto. | - $CON(CH_3)_2$ | dto. | dto. |
| 80 | dto. | - $SO_2NH_2$ | 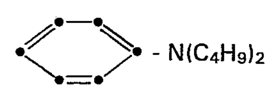 | dto. |
| 81 | dto. | - $SO_2N(CH_3)_2$ | dto. | dto. |
| 82 | dto. | - $SO_2N(C_2H_5)_2$ | dto. | dto. |
| 83 | dto. | - $CF_3$ | dto. | dto. |
| 84 | dto. | - Cl | dto. | dto. |
| 85 | dto. | 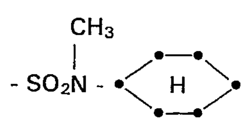 | dto. | dto. |
| 86 | dto. | - $CON(CH_3)_2$ | dto. | dto. |
| 87 | dto. | dto. | 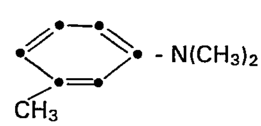 | dto. |
| 88 | dto. | - $SO_2NH_2$ | dto. | dto. |
| 89 | dto. | - $SO_2N(CH_3)_2$ | dto. | rot |
| 90 | - H | dto. | dto. | dto. |
| 91 | dto. | - $SO_2NHCH_3$ | dto. | dto. |
| 92 | - $CH_3$ | - $SO_2NH_2$ | 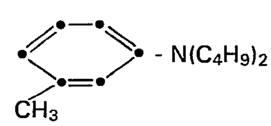 | rot |
| 93 | - H | dto. | dto. | dto. |

*Tabelle 1 (Fortsetzung)*

| Beispiel | Diazokomponente X | R | Kupplungskomponente | Nuance auf Polyamid |
|---|---|---|---|---|
| 94 | $-CH_3$ | $-SO_2NHCH_3$ | 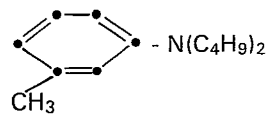 | rot |
| 95 | - H | dto. | dto. | dto. |
| 96 | $-CH_3$ | $-SO_2N(CH_3)_2$ | dto. | dto. |
| 97 | - H | dto. | dto. | dto. |
| 98 | $-CH_3$ | 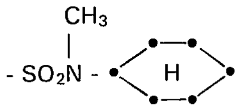 | dto. | dto. |
| 99 | - H | dto. | dto. | dto. |
| 100 | $-CH_3$ | - Cl | dto. | dto. |
| 101 | - H | dto. | dto. | dto. |
| 102 | $-CH_3$ | $-SO_2CH_3$ | dto. | dto. |
| 103 | dto. | $-SO_2C_2H_5$ | dto. | dto. |
| 104 | - Cl | dto. | dto. | dto. |
| 105 | $-CH_3$ | $-CF_3$ | dto. | dto. |
| 106 | - H | dto. | dto. | dto. |
| 107 | $-CH_3$ | $-SO_2NH_2$ | 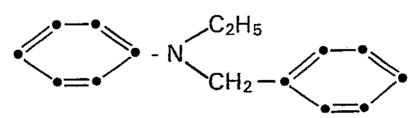 | rotstichig-orange |
| 108 | dto. | $-SO_2N(CH_3)_2$ | dto. | dto. |
| 109 | dto. | $-CF_3$ | dto. | dto. |
| 110 | dto. | $-SO_2N(CH_3)_2$ | 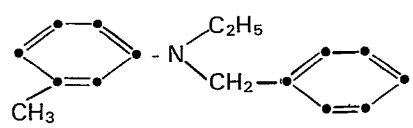 | gelbstichig rot |
| 111 | dto. | $-CF_3$ | dto. | dto. |
| 112 | dto. | $-SO_2NHCH_3$ | dto. | dto. |
| 113 | dto. | $-SO_2NH_2$ | 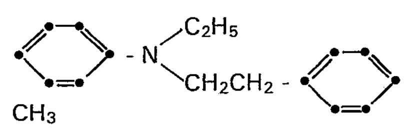 | rot |
| 114 | - H | dto. | dto. | dto. |
| 115 | $-CH_3$ | $-SO_2N(CH_3)_2$ | dto. | dto. |
| 116 | dto. | $-SO_2N(C_2H_5)_2$ | dto. | dto. |
| 117 | - H | dto. | dto. | dto. |
| 118 | $-CH_3$ | - Cl | dto. | dto. |
| 119 | dto. | $-CF_3$ | dto. | dto. |
| 120 | - H | dto. | dto. | dto. |
| 121 | $-CH_3$ | $-CONH_2$ | dto. | gelbstichig rot |

*Tabelle 1 (Fortsetzung)*

| Beispiel | Diazokomponente X | R | Kupplungskomponente | Nuance auf Polyamid |
|---|---|---|---|---|
| 122 | - $CH_3$ | - $SO_2NH_2$ | $CH_3$ - 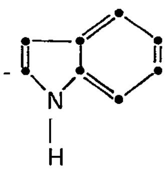 | rotstichig gelb |
| 123 | - H | dto. | dto. | dto. |
| 124 | - $CH_3$ | - $SO_2NHCH_3$ | dto. | dto. |
| 125 | - H | dto. | dto. | dto. |
| 126 | - $CH_3$ | - $SO_2N(CH_3)_2$ | dto. | dto. |
| 127 | - H | dto. | dto. | dto. |
| 128 | - $CH_3$ | - $SO_2N(C_2H_5)_2$ | dto. | dto. |
| 129 | dto. | - $CONH_2$ | dto. | dto. |
| 130 | dto. | - $CON(CH_3)_2$ | dto. | dto. |
| 131 | dto. | $CH_3$ - $SO_2N$ - 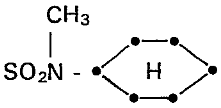 | dto. | dto. |
| 132 | dto. | - $SO_2C_2H_5$ | dto. | dto. |
| 133 | - Cl | dto. | dto. | dto. |
| 134 | - H | - Cl | dto. | dto. |
| 135 | - $CH_3$ | - $CF_3$ | dto. | dto. |
| 136 | dto. | - $SO_2NH_2$ | $CH_3$ - 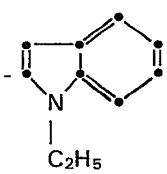 | rotstichig gelb |
| 137 | - H | dto. | dto. | dto. |
| 138 | - $CH_3$ | - $SO_2NHCH_3$ | dto. | dto. |
| 139 | - H | dto. | dto. | dto. |
| 140 | - $CH_3$ | - $SO_2N(CH_3)_2$ | dto. | dto. |
| 141 | dto. | - $CONH_2$ | dto. | dto. |
| 142 | dto. | - $CON(CH_3)_2$ | dto. | dto. |
| 143 | dto. | - Cl | dto. | dto. |
| 144 | dto. | - $CF_3$ | dto. | dto. |
| 145 | - Cl | - $SO_2C_2H_5$ | dto. | dto. |
| 146 | - $CH_3$ | - $SO_2NH_2$ | 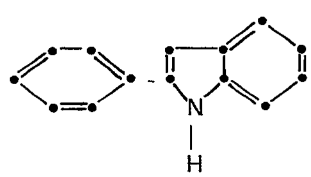 | orange |
| 147 | - H | dto. | dto. | dto. |
| 148 | - $CH_3$ | - $SO_2NHCH_3$ | dto. | dto. |

*Tabelle 1 (Fortsetzung)*

| Bei-spiel | Diazokomponente X | R | Kupplungskomponente | Nuance auf Polyamid |
|---|---|---|---|---|
| 149 | - H | - $SO_2NHCH_3$ | 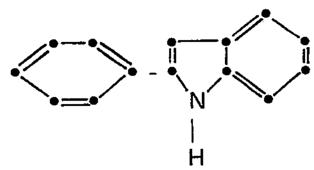 | orange |
| 150 | - $CH_3$ | - $CONH_2$ | dto. | dto. |
| 151 | dto. | - $CON(CH_3)_2$ | dto. | dto. |
| 152 | - $CH_3$ | - $SO_2NH_2$ | 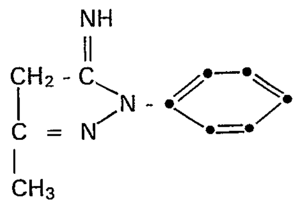 | gelb |
| 153 | - H | dto. | dto. | dto. |
| 154 | - $CH_3$ | - $SO_2NHCH_3$ | dto. | dto. |
| 155 | - H | dto. | dto. | dto. |
| 156 | - $CH_3$ | - $SO_2N(CH_3)_2$ | dto. | dto. |
| 157 | - H | dto. | dto. | dto. |
| 158 | - $CH_3$ | 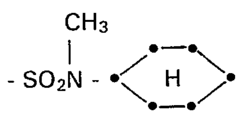 | dto. | dto. |
| 159 | dto. | - $SO_2C_2H_5$ | dto. | dto. |
| 160 | - Cl | dto. | dto. | dto. |
| 161 | - H | - Cl | 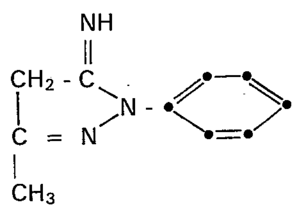 | dto. |
| 162 | - $CH_3$ | - $CF_3$ | dto. | dto. |
| 163 | dto. | - $CONH_2$ | dto. | grünstichig gelb |
| 164 | dto. | - $CON(CH_3)_2$ | dto. | dto. |
| 165 | dto. | - $CONHC_2H_5$ | dto. | dto. |
| 166 | dto. | - $CONH_2$ | 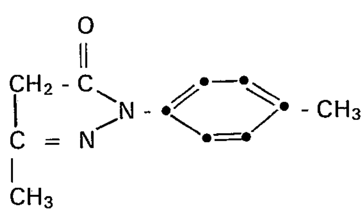 | rotstichig gelb |
| 167 | dto. | - $CON(CH_3)_2$ | dto. | dto. |
| 168 | dto. | - $SO_2N(CH_3)_2$ | dto. | dto. |

*Tabelle 1 (Fortsetzung)*

| Bei-spiel | Diazokomponente X | R | Kupplungskomponente | Nuance auf Polyamid |
|---|---|---|---|---|
| 169 | - $CH_3$ | - $CONH_2$ | 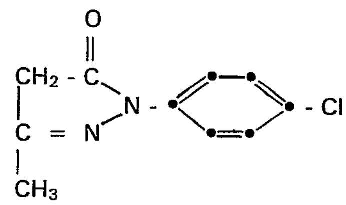 | rotstichig gelb |
| 170 | dto. | - $CON(CH_3)_2$ | dto. | dto. |
| 171 | dto. | - $SO_2N(CH_3)_2$ | dto. | dto. |
| 172 | - $CH_3$ | - $SO_2NH_2$ | 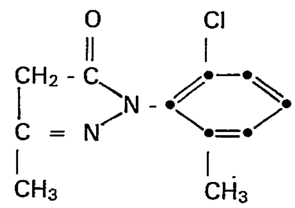 | rotstichig gelb |
| 173 | dto. | - $SO_2N(CH_3)_2$ | dto. | dto. |
| 174 | dto. | - $CONH_2$ | dto. | dto. |
| 175 | dto. | - $CON(CH_3)_2$ | dto. | dto. |
| 176 | dto. | - Cl | dto. | dto. |
| 177 | - $CH_3$ | - $SO_2N(CH_3)_2$ | 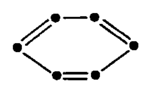 - $OCH_3$ * | gelbstichig orange |
| 178 | - H | dto. | dto. | dto. |
| 179 | - $CH_3$ | - $CON(CH_3)_2$ | dto. | dto. |
| 180 | dto. | - Cl | dto. | dto. |
| 181 | dto. | - $SO_2CH_3$ | dto. | dto. |
| 182 | dto. | - $CF_3$ | dto. | dto. |
| 183 | dto. | - $SO_2N(CH_3)_2$ | 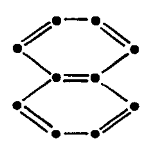 - $OCH_3$ * | orange |
| 184 | dto. | - $CON(CH_3)_2$ | dto. | dto. |
| 185 | dto. | - Cl | dto. | dto. |
| 186 | dto. | - $SO_2NH_2$ | 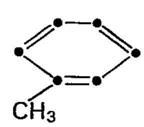 - $N(C_2H_4CN)_2$ | dto. |
| 187 | dto. | - $SO_2N(CH_3)_2$ | dto. | dto. |
| 188 | dto. | - Cl | dto. | dto. |
| 189 | dto. | - $CON(CH_3)_2$ | dto. | dto. |
| 190 | dto. | - $SO_2NH_2$ | 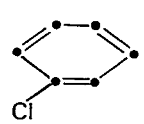 - $N(CH_3)_2$ | rotstichig orange |
| 191 | dto. | - $CONH_2$ | dto. | dto. |

*Tabelle 1 (Fortsetzung)*

| Beispiel | Diazokomponente X | R | Kupplungskomponente | Nuance auf Polyamid |
|---|---|---|---|---|
| 192 | - $CH_3$ | - Cl | 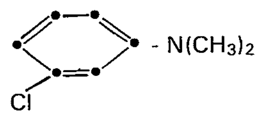 | rotstichig orange |
| 193 | dto. | 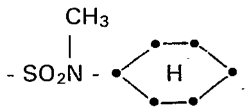 | 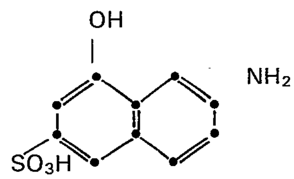 | violett |
| 194 | dto. | 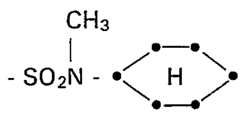 | 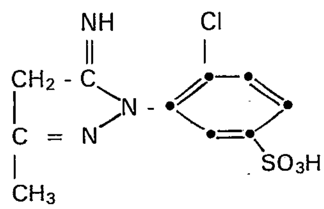 | gelb |
| 195 | - H | dto. | dto. | dto. |
| 196 | - $CH_3$ | - $CF_3$ | dto. | dto. |
| 197 | dto. | 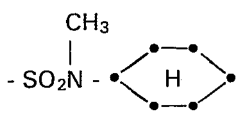 | 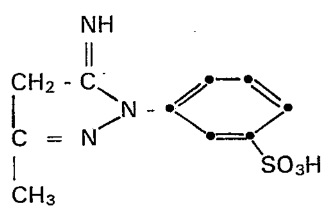 | dto. |
| 198 | dto. | dto. | 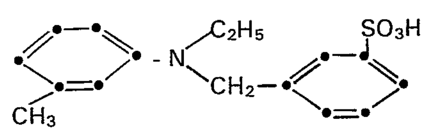 | gelbstichig rot |
| 199 | dto. | - $SO_2NH_2$ | 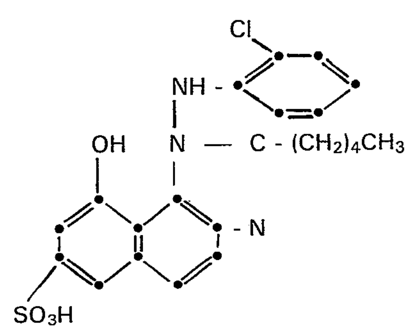 | rot |
| 200 | dto. | - $SO_2N(CH_3)_2$ | dto. | dto. |
| 201 | dto. | dto. | 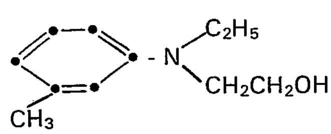 | dto. |
| 202 | dto. | dto. | 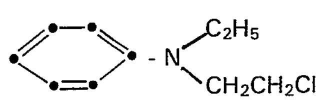 | gelbstichig rot |

*Tabelle 1 (Fortsetzung)*

| Bei-spiel | Diazokomponente X | R | Kupplungskomponente | Nuance auf Polyamid |
|---|---|---|---|---|
| 203 | - $CH_3$ | - $SO_2NH_2$ | 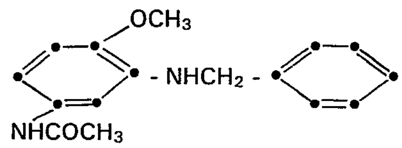 - $NHCH_2$ - | blaustichig rot |
| 204 | - Cl | - $CH_3$ | 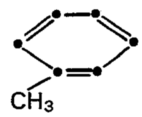 - $(C_2H_5)_2$ | gelbstichig rot |
| 205 | - H | dto. | dto. | dto. |
| 206 | - Cl | - $SO_2NH_2$ | dto. | rot |
| 207 | dto. | - $SO_2NHCH_3$ | dto. | dto. |
| 208 | dto. | - $SO_2N(CH_3)_2$ | dto. | dto. |
| 209 | dto. | - $SO_2NHC_2H_5$ | dto. | dto. |
| 210 | dto. | - $SO_2N(C_2H_5)_2$ | dto. | dto. |
| 211 | dto. | - $SO_2NHC_4H_9$ | dto. | dto. |
| 212 | dto. | - $SO_2N$ - 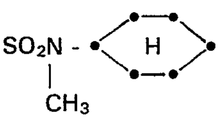 | dto. | dto. |
| 213 | dto. | - $SO_2NH$ - 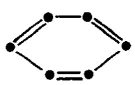 | dto. | dto. |
| 214 | - H | dto. | dto. | dto. |
| 215 | dto. | dto. | 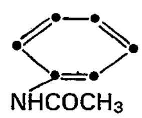 - $N(C_2H_5)_2$ | dto. |
| 216 | - Cl | dto. | dto. | dto. |
| 217 | dto. | - $SO_2NH_2$ | dto. | dto. |
| 218 | dto. | - $SO_2NHCH_3$ | dto. | dto. |
| 219 | dto. | - Cl | dto. | dto. |
| 220 | dto. | - $CF_3$ | dto. | dto. |
| 221 | - $CH_3$ | dto. | dto. | dto. |
| 222 | - H | dto. | dto. | dto. |
| 223 | dto. | - $SO_2NH_2$ | 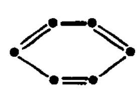 - $N(C_4H_9)_2$ | dto. |
| 224 | - Cl | dto. | dto. | dto. |
| 225 | dto. | dto. | 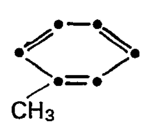 - $N(C_4H_9)_2$ | dto. |
| 226 | dto. | - $SO_2NHCH_3$ | dto. | dto. |
| 227 | dto. | - $CF_3$ | dto. | dto. |

*Tabelle 1 (Fortsetzung)*

| Beispiel | Diazokomponente X | R | Kupplungskomponente | Nuance auf Polyamid |
|---|---|---|---|---|
| 228 | - $CH_3$ | 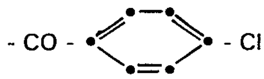 | 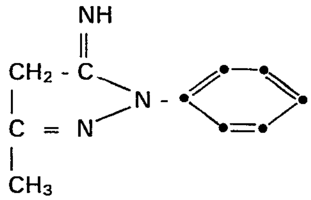 | gelb |
| 229 | dto. | - $SO_2NH_2$ | 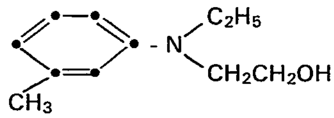 | rot |
| 230 | - H | dto. | dto. | dto. |
| 231 | - Cl | dto. | dto. | dto. |
| 232 | dto. | - $CF_3$ | dto. | dto. |
| 233 | - H | dto. | dto. | dto. |
| 234 | - $CH_3$ | dto. | dto. | dto. |
| 235 | - Cl | - Cl | dto. | dto. |
| 236 | dto. | - $CH_3$ | dto. | dto. |
| 237 | - $CH_3$ | - Cl | dto. | dto. |
| 238 | dto. | - $SO_2NH_2$ | 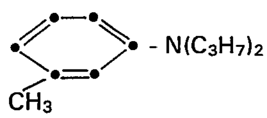 | dto. |
| 239 | - H | dto. | dto. | dto. |
| 240 | - Cl | dto. | dto. | dto. |
| 241 | dto. | - $CF_3$ | dto. | dto. |
| 242 | - H | dto. | dto. | dto. |
| 243 | - $CH_3$ | dto. | dto. | dto. |
| 244 | - Cl | - Cl | dto. | dto. |
| 245 | dto. | - $CH_3$ | dto. | dto. |
| 246 | - $CH_3$ | - Cl | dto. | dto. |
| 247 | dto. | dto. | 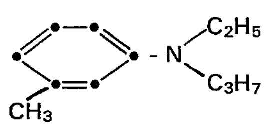 | dto. |
| 248 | - Cl | - $CH_3$ | dto. | dto. |
| 249 | dto. | - Cl | dto. | dto. |
| 250 | - $CH_3$ | - $CF_3$ | dto. | dto. |
| 251 | - H | dto. | dto. | dto. |
| 252 | - Cl | dto. | dto. | dto. |
| 253 | dto. | - $SO_2NH_2$ | dto. | dto. |
| 254 | - $CH_3$ | dto. | dto. | dto. |
| 255 | - H | dto. | dto. | dto. |

*Tabelle 1 (Fortsetzung)*

| Bei-spiel | Diazokomponente X | R | Kupplungskomponente | Nuance auf Polyamid |
|---|---|---|---|---|
| 256 | - Cl | - $SO_2NH_2$ | 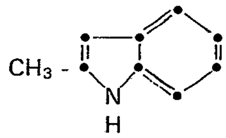 | rotstichig gelb |
| 257 | dto. | - $CF_3$ | dto. | dto. |
| 258 | - H | dto. | dto. | dto. |
| 259 | - Cl | - Cl | dto. | dto. |
| 260 | - $CH_3$ | - $CH_3$ | dto. | dto. |
| 261 | - Cl | dto. | dto. | dto. |
| 262 | - Cl | - $SO_2NH_2$ | 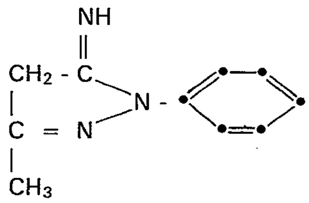 | gelb |
| 263 | dto. | - $CF_3$ | dto. | dto. |
| 264 | - H | dto. | dto. | dto. |
| 265 | - Cl | - Cl | dto. | dto. |
| 266 | - $CH_3$ | - $CH_3$ | dto. | dto. |
| 267 | - Cl | dto. | dto. | dto. |
| 268 | dto. | - $CF_3$ | 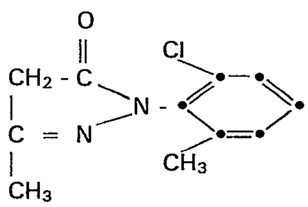 | rotstichig gelb |
| 269 | - H | dto. | dto. | dto. |
| 270 | - Cl | - Cl | dto. | dto. |
| 271 | - $CH_3$ | - $CH_3$ | dto. | dto. |
| 272 | - Cl | dto. | dto. | dto. |
| 273 | - $CH_3$ | - $CF_3$ | dto. | dto. |
| 274 | dto. | - $SO_2NH_2$ | 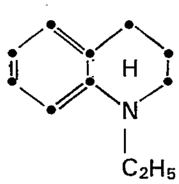 | rot |
| 275 | - H | dto. | dto. | dto. |
| 276 | - Cl | dto. | dto. | dto. |
| 277 | dto. | - $CF_3$ | dto. | dto. |
| 278 | - H | dto. | dto. | dto. |
| 279 | - $CH_3$ | dto. | dto. | dto. |
| 280 | - Cl | - Cl | dto. | dto. |

*Tabelle 1 (Fortsetzung)*

| Beispiel | Diazokomponente X | R | Kupplungskomponente | Nuance auf Polyamid |
|---|---|---|---|---|
| 281 | - Cl | - $CH_3$ | 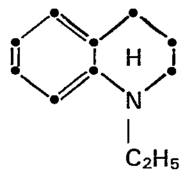 | rot |
| 282 | - $CH_3$ | - Cl | dto. | dto. |
| 283 | dto. | - $CH_3$ | dto. | dto. |
| 284 | dto. | - $SO_2NH_2$ | 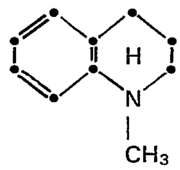 | dto. |

Wenn man wie in den Beispielen 1 bis 13 verfährt, jedoch als Diazokomponente eine Verbindung der Formel

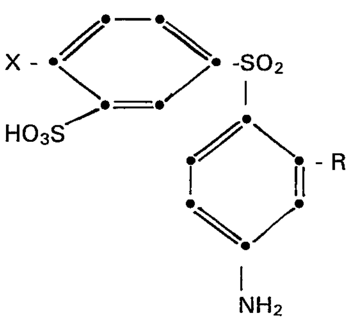

worin R und X die in der folgenden Tabelle 2 angegebenen Bedeutungen haben, und als Kupplungskomponente die in der folgenden Tabelle 2 aufgeführten Verbindungen einsetzt, so erhält man ebenfalls wertvolle Farbstoffe mit ähnlich guten Eigenschaften, die Polyamid und Wolle in der angegebenen Nuance anfärben.

*Tabelle 2*

| Beispiel | Diazokomponente X | R | Kupplungskomponente | Nuance auf Polyamid |
|---|---|---|---|---|
| 285 | - $CH_3$ | - $CONH_2$ | 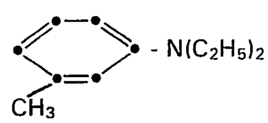 | gelbstichig rot |
| 286 | dto. | - Cl | dto. | dto. |

Wenn man wie in den Beispielen 1 bis 13 verfährt, jedoch als Diazokomponente eine Verbindung der Formel

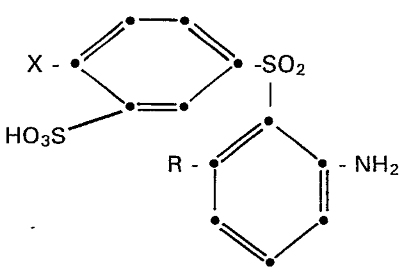

worin R und X die in der folgenden Tabelle 3 angegebenen Bedeutungen haben, und als Kupplungskomponente die in der folgenden Tabelle 3 aufgeführten Verbindungen einsetzt, so erhält man ebenfalls wertvolle Farbstoffe mit ähnlich guten Eigenschaften, die Polyamid und Wolle in der angegebenen Nuance anfärben.

*Tabelle 3*

| Bei-spiel | Diazokomponente X | R | Kupplungskomponente | Nuance auf Polyamid |
|---|---|---|---|---|
| 287 | - $CH_3$ | - Cl | 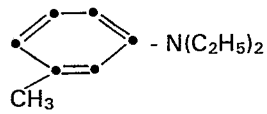 | gelbstichig rot |
| 288 | - H | dto. | dto. | dto. |
| 289 | - $CH_3$ | dto. | 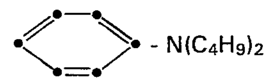 | dto. |
| 290 | dto. | dto. | 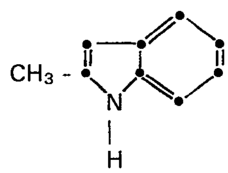 | rotstichig gelb |
| 291 | - H | dto. | dto. | dto. |
| 292 | - $CH_3$ | dto. | 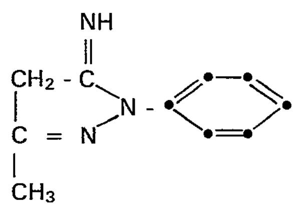 | gelb |
| 293 | - H | dto. | dto. | dto. |
| 294 | - $CH_3$ | dto. | 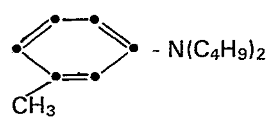 | gelbstichig rot |
| 295 | - H | dto. | dto. | dto. |

Wenn man wie in den Beispielen 1 bis 13 verfährt, jedoch als Diazokomponente eine Verbindung der Formel

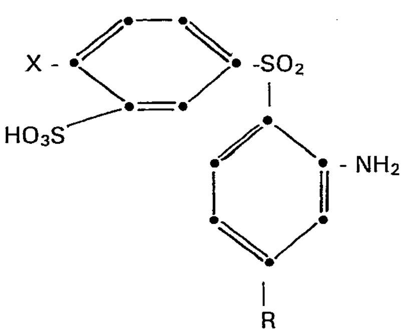

worin R und X die in der folgenden Tabelle 4 angegebenen Bedeutungen haben, und als Kupplungskomponente die in der folgenden Tabelle 4 aufgeführten Verbindungen einsetzt, so erhält man ebenfalls wertvolle Farbstoffe mit ähnlich guten Eigenschaften, die Polyamid und Wolle in der angegebenen Nuance anfärben.

*Tabelle 4*

| Bei-spiel | Diazokomponente X | R | Kupplungskomponente | Nuance auf Polyamid |
|---|---|---|---|---|
| 296 | - $CH_3$ | - $SO_2NH_2$ | 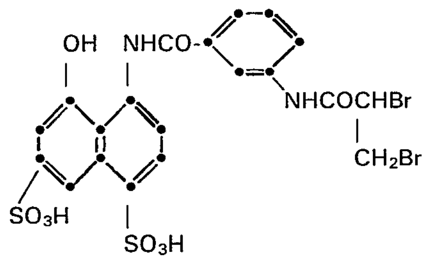 | rot |
| 297 | - H | dto. | dto. | dto. |
| 298 | dto. | - $SO_2N(CH_3)_2$ | dto. | dto. |
| 299 | - $CH_3$ | - $CONH_2$ | dto. | dto. |
| 300 | dto. | - $SO_2C_2H_5$ | dto. | dto. |
| 301 | dto. | - Cl | dto. | dto. |
| 302 | dto. | - $CF_3$ | dto. | dto. |
| 303 | dto. | 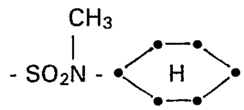 | dto. | dto. |
| 304 | dto. | dto. | 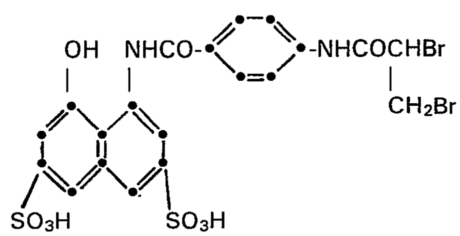 | dto. |
| 305 | dto. | - $SO_2NH_2$ | dto. | dto. |
| 306 | dto. | dto. | 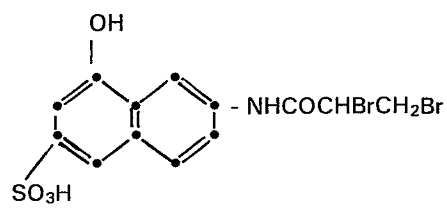 | gelbstichig rot |
| 307 | - H | dto. | dto. | dto. |
| 308 | - $CH_3$ | dto. | 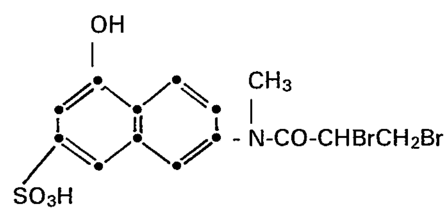 | rotstichig orange |
| 309 | - H | dto. | dto. | dto. |
| 310 | - $CH_3$ | - $SO_2NH_2$ | 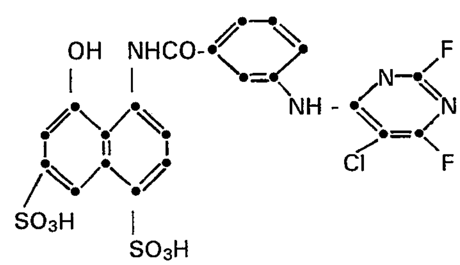 | rot |
| 311 | - H | dto. | dto. | dto. |

Wenn man wie in den Beispielen 1 bis 13 verfährt, jedoch als Diazokomponente eine Verbindung der Formel

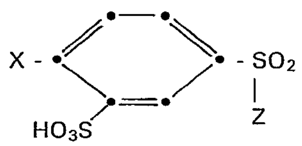

worin X und Z die in der folgenden Tabelle 5 angegebenen Bedeutungen haben, und als Kupplungskomponente die in der folgenden Tabelle 5 aufgeführten Verbindungen einsetzt, so erhält man ebenfalls wertvolle Farbstoffe mit ähnlich guten Eigenschaften, die Polyamid und Wolle in der angegebenen Nuance anfärben.

*Tabelle 5*

| Beispiel | Diazokomponente X | Z | Kupplungskomponente | Nuance auf Polyamid |
|---|---|---|---|---|
| 312 | - $CH_3$ | 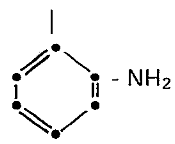 | 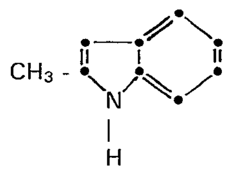 | rotstichig gelb |
| 313 | - H | dto. | dto. | dto. |
| 314 | - $CH_3$ | dto. | 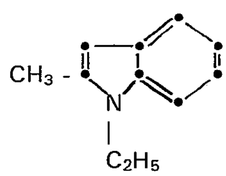 | dto. |
| 315 | - H | dto. | dto. | dto. |
| 316 | - Cl | dto. | dto. | dto. |
| 317 | - $CH_3$ | dto. | 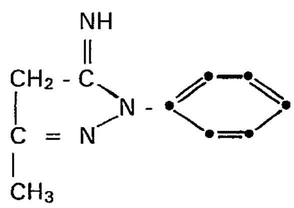 | gelb |
| 318 | - Cl | dto. | dto. | dto. |
| 319 | - H | dto. | dto. | dto. |
| 320 | - $CH_3$ | dto. | 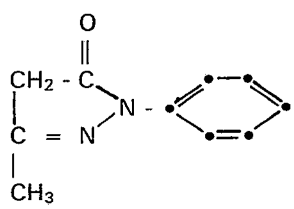 | rotstichig gelb |
| 321 | - Cl | dto. | dto. | dto. |
| 322 | - H | dto. | dto. | dto. |
| 323 | - $CH_3$ | dto. | 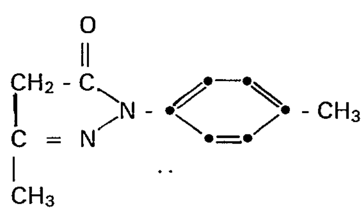 | dto. |
| 324 | - Cl | dto. | dto. | dto. |
| 325 | - H | dto. | dto. | dto. |

*Tabelle 5 (Fortsetzung)*

| Beispiel | Diazokomponente X | Z | Kupplungskomponente | Nuance auf Polyamid |
|---|---|---|---|---|
| 326 | - $CH_3$ | 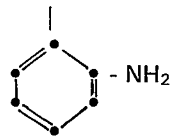 | 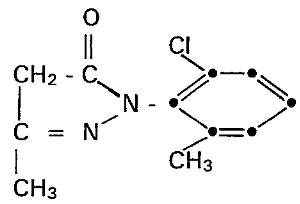 | rotstichig gelb |
| 327 | - Cl | dto. | dto. | dto. |
| 328 | - H | dto. | dto. | dto. |
| 329 | - $CH_3$ | dto. | 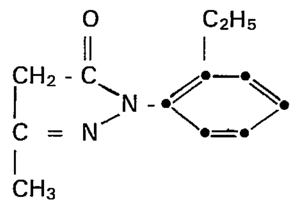 | dto. |
| 330 | - Cl | dto. | dto. | dto. |
| 331 | - H | dto. | dto. | dto. |
| 332 | - $CH_3$ | dto. | 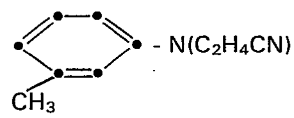 | gelbstichig orange |
| 333 | - H | dto. | dto. | dto. |
| 334 | - Cl | dto. | dto. | dto. |
| 335 | - $CH_3$ | dto. | 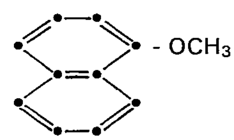 * | orange |
| 336 | - H | dto. | dto. | dto. |
| 337 | - Cl | dto. | dto. | dto. |
| 338 | - $CH_3$ | dto. | 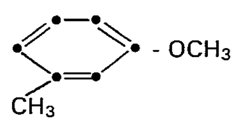 * | dto. |
| 339 | - Cl | dto. | dto. | dto. |
| 340 | - H | dto. | dto. | dto. |
| 341 | - $CH_3$ | dto. | 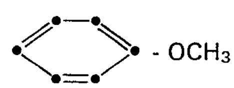 * | gelbstichig orange |
| 342 | - Cl | dto. | dto. | dto. |
| 343 | - H | dto. | dto. | dto. |
| 344 | - $CH_3$ | dto. | 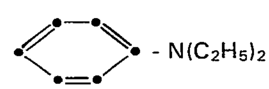 | rotstichig orange |
| 345 | - H | dto. | dto. | dto. |
| 346 | - H | dto. | dto. | dto. |

*Tabelle 5 (Fortsetzung)*

| Beispiel | Diazokomponente X | Z | Kupplungskomponente | Nuance auf Polyamid |
|---|---|---|---|---|
| 347 | $-CH_3$ | 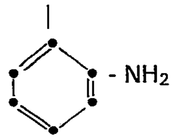 | 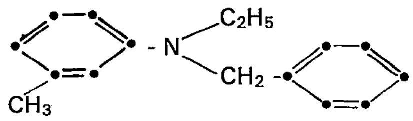 | rotstichig orange |
| 348 | $-Cl$ | dto. | dto. | dto. |
| 349 | $-H$ | dto. | dto. | dto. |
| 350 | $-CH_3$ | dto. | 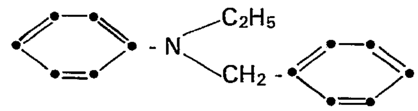 | orange |
| 351 | $-Cl$ | $-Cl$ | dto. | dto. |
| 352 | $-H$ | dto. | dto. | dto. |
| 353 | $-CH_3$ | dto. | 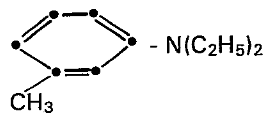 | gelbstichig rot |
| 354 | $-Cl$ | dto. | dto. | dto. |
| 355 | $-H$ | dto. | dto. | dto. |
| 356 | $-CH_3$ | dto. | 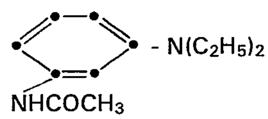 | dto. |
| 357 | $-Cl$ | dto. | dto. | dto. |
| 358 | $-H$ | dto. | dto. | dto. |
| 359 | $-CH_3$ | 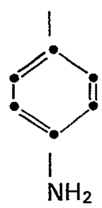 | 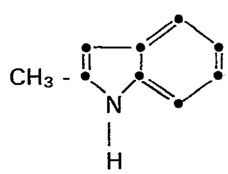 | rotstichig gelb |
| 360 | $-H$ | dto. | dto. | dto. |
| 361 | $-Cl$ | dto. | dto. | dto. |
| 362 | $-CH_3$ | dto. | 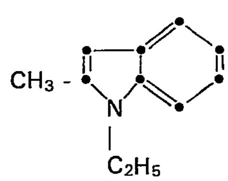 | dto. |
| 363 | $-H$ | dto. | dto. | dto. |
| 364 | $-Cl$ | dto. | dto. | dto. |
| 365 | $-CH_3$ | dto. | 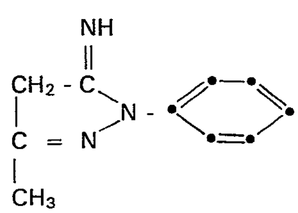 | gelb |

*Tabelle 5 (Fortsetzung)*

| Bei-spiel | Diazokomponente X | Z | Kupplungskomponente | Nuance auf Polyamid |
|---|---|---|---|---|
| 366 | - Cl | 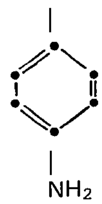 | 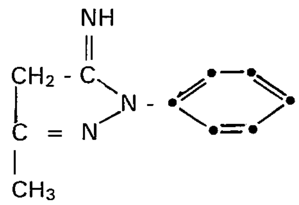 | gelb |
| 367 | - H | dto. | dto. | dto. |
| 368 | - $CH_3$ | dto. | 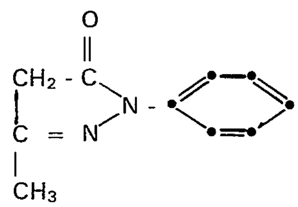 | rotstichig gelb |
| 369 | - Cl | dto. | dto. | dto. |
| 370 | - H | dto. | dto. | dto. |
| 371 | - $CH_3$ | dto. | 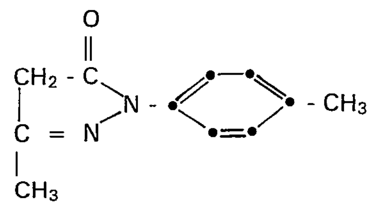 | dto. |
| 372 | - Cl | dto. | dto. | dto. |
| 373 | - H | dto. | dto. | dto. |
| 374 | - $CH_3$ | dto. | 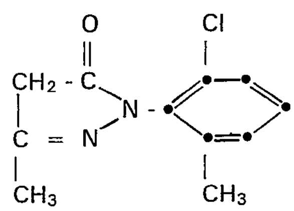 | dto. |
| 375 | - Cl | dto. | dto. | dto. |
| 376 | - H | dto. | dto. | dto. |
| 377 | - $CH_3$ | dto. | 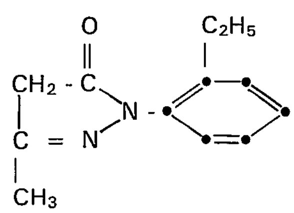 | rotstichig gelb |
| 378 | - Cl | dto. | dto. | dto. |
| 379 | - H | dto. | dto. | dto. |
| 380 | - $CH_3$ | dto. | 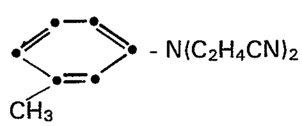 | gelbstichig orange |
| 381 | - Cl | dto. | dto. | dto. |
| 382 | - H | sto. | dto. | dto. |

*Tabelle 5 (Fortsetzung)*

| Bei-spiel | Diazokomponente X | Z | Kupplungskomponente | Nuance auf Polyamid |
|---|---|---|---|---|
| 383 | - $CH_3$ | 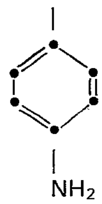 | 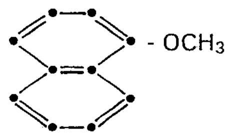 * | orange |
| 384 | - Cl | dto. | dto. | dto. |
| 385 | - H | dto. | dto. | dto. |
| 386 | - $CH_3$ | dto. | 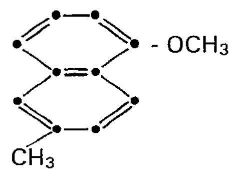 * | orange |
| 387 | - Cl | dto. | dto. | dto. |
| 388 | - H | dto. | dto. | dto. |
| 389 | - $CH_3$ | dto. | 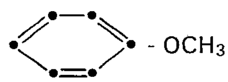 * | gelbstichig orange |
| 390 | - Cl | dto. | dto. | dto. |
| 391 | - H | dto. | dto. | dto. |
| 392 | - $CH_3$ | dto. | 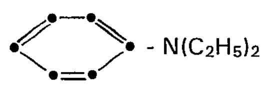 | rotstichig orange |
| 393 | - Cl | dto. | dto. | dto. |
| 394 | - H | dto. | dto. | dto. |
| 395 | - $CH_3$ | dto. | 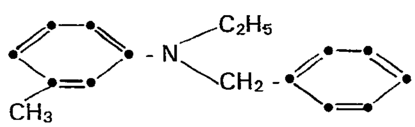 | dto. |
| 396 | - Cl | dto. | dto. | dto. |
| 397 | - H | dto. | dto. | dto. |
| 398 | - $CH_3$ | dto. | 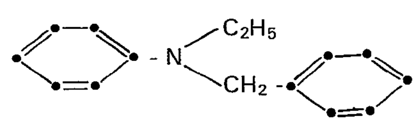 | orange |
| 399 | - Cl | dto. | dto. | dto. |
| 400 | - H | dto. | dto. | dto. |
| 401 | - $CH_3$ | dto. | 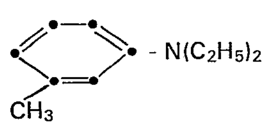 | gelbstichig rot |
| 402 | - Cl | dto. | dto. | dto. |
| 403 | - H | dto. | dto. | dto. |

Tabelle 5 (Fortsetzung)

| Beispiel | Diazokomponente X | Z | Kupplungskomponente | Nuance auf Polyamid |
|---|---|---|---|---|
| 404 | - $CH_3$ | 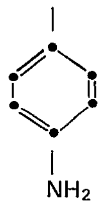 | 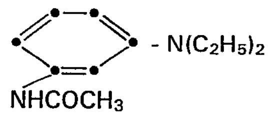 | gelbstichig rot |
| 405 | - Cl | dto. | dto. | dto. |
| 406 | - H | dto. | dto. | dto. |
| 407 | - $CH_3$ | dto. | 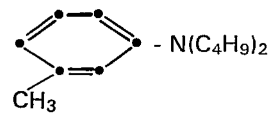 | dto. |
| 408 | - Cl | dto. | dto. | dto. |
| 409 | - H | dto. | dto. | dto. |
| 410 | - $CH_3$ | 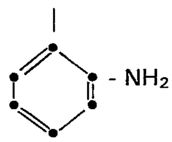 | dto. | dto. |
| 411 | - Cl | dto. | dto. | dto. |
| 412 | - H | dto. | dto. | dto. |
| 413 | - $CH_3$ | dto. | 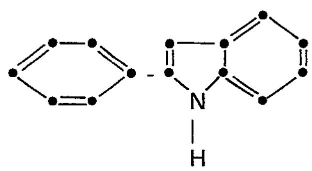 | gelbstichig orange |
| 414 | - Cl | dto. | dto. | dto. |
| 415 | - H | dto. | dto. | dto. |
| 416 | - $CH_3$ | 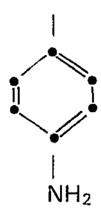 | 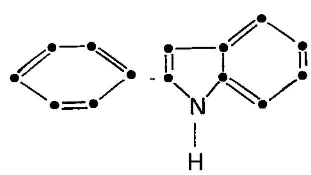 | gelb |
| 417 | - Cl | dto. | dto. | dto. |
| 418 | - H | dto. | dto. | dto. |
| 419 | dto. | dto. | 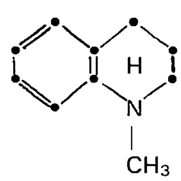 | gelbstichig rot |
| 420 | - Cl | dto. | dto. | dto. |
| 421 | - $CH_3$ | dto. | dto. | dto. |

*Tabelle 5 (Fortsetzung)*

| Bei-spiel | Diazokomponente X | Z | Kupplungskomponente | Nuance auf Polyamid |
|---|---|---|---|---|
| 422 | - $CH_3$ | 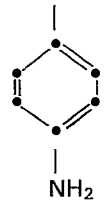 | 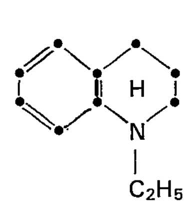 | gelbstichig rot |
| 423 | - Cl | dto. | dto. | dto. |
| 424 | - H | dto. | dto. | dto. |
| 425 | dto. | dto. | 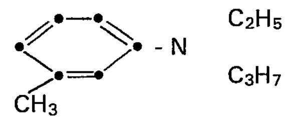 | dto. |
| 426 | - Cl | dto. | dto. | dto. |
| 427 | - $CH_3$ | dto. | dto. | dto. |

*Färbevorschrift I*

Man färbt 10 Teile Helanca® -Trikot in 500 Teilen einer wässrigen Flotte, die 2 g/l Ammonacetat enthält und mit Essigsäure auf pH 5 gestellt wird. Der Anteil des Farbstoffes gemäss Beispiel 12 beträgt 1% bezogen auf das Fasergewicht. Die Färbedauer bei einer Temperatur von 98° beträgt 30 bis 90 Minuten. Das gefärbte Helanca® -Stück wird anschliessend herausgenommen und wie üblich gewaschen und getrocknet. Man erhält ein rotstichig gelb gefärbtes Helanca® -Stück, das eine reine Nuance und gute Gesamtechtheiten aufweist.

*Färbevorschrift II*

Man färbt 10 Teile Helanca® -Trikot in 500 Teilen einer wässrigen Flotte, die 1 g/l Mononatriumphosphat enthält und mit Dinatriumphosphat auf pH 6 gestellt wird. Der Anteil des Farbstoffes gemäss Beispiel 11 beträgt 2%, bezogen auf das Fasergewicht. Die Färbedauer bei einer Temperatur von 98° beträgt 30 bis 90 Minuten. Das gefärbte Helanca® -Stück wird anschliessend herausgenommen und wie üblich gewaschen und getrocknet. Man erhält ein rot gefärbtes Helanca® -Stück, das eine reine Nuance und gute Gesamtechtheiten aufweist.

*Färbevorschrift III*

Man färbt 10 Teile eines Wollstückes in 500 Teilen einer wässrigen Flotte, enthaltend, bezogen auf das Fasergewicht, 4 Gewichtsprozent Ammonsulfat, 1,5 Gewichtsprozent 80%ige Essigsäure, 1 Gewichtsprozent eines substituierten Alkylaminopolyglykoläthers und 3 Gewichtsprozent des Farbstoffes gemäss Beispiel 13, bei einer Temperatur von 98° während 30 bis 90 Minuten. Anschliessend kühlt man auf 80° ab, neutralisiert durch Zugabe von 2,5 Gewichtsprozent 25%igem wässrigem Ammoniak und stellt während 15 Minuten bei dieser Temperatur fertig. Das gefärbte Wollstück wird anschliessend herausgenommen und wie üblich gewaschen und getrocknet. Man erhält ein Wollstück, das eine reine Nuance und gute Gesamtechtheiten aufweist.

**Patentansprüche**

1. Monoazofarbstoffe der Formel

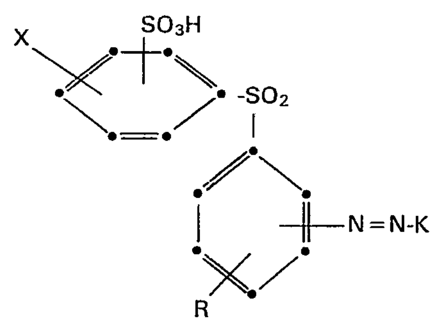 (1),

worin K der Rest eines Amino- oder Alkoxybenzols, Alkoxynaphthalins, Naphthols, Aminonaphthols, Pyrazolons, Aminopyrazols, Indols, Naphthimidazols, Diphenylamins, Tetrahydrochinolins oder Acetessigsäureamids ist, wobei die oben genannten Reste weiter substituiert sein können, und worin R Wasserstoff, Halogen, $C_{1-6}$-Alkyl, Trifluormethyl, Carboxy oder eine $-SO_2-C_{1-6}$-Alkyl, $-SO_2-R_1$,

$-SO_2N\begin{matrix}R_2\\R_3\end{matrix}$, $-CON\begin{matrix}R_2\\R_3\end{matrix}$ oder $-CO-R_4$-Gruppe ist,

wobei $R_1$ einen gegebenenfalls substituierten Phenyl- oder Naphthyl-$C_{1-4}$-alkylrest, $R_2$ und $R_3$ unabhängig voneinander Wasserstoff oder einen gegebenenfalls substituierten $C_{1-6}$-Alkyl- oder $C_{5-7}$-Cycloalkylrest und $R_4$ einen gegebenenfalls substituierten Phenylrest bedeuten, und worin X Wasserstoff, $C_{1-4}$-Alkyl, $C_{1-4}$-Alkoxy oder Halogen bedeutet, und wobei R in Formel (1) nicht Wasserstoff oder Chlor sein darf, wenn der Rest -N=N-K in o-Stellung zur

$-SO_2$-Gruppe an den Phenylring gebunden ist und K der Rest der 2-Amino-8-hydroxynaphthalin-6-sulfonsäure ist, und wobei R in Formel (1) nicht Wasserstoff sein darf, wenn der Rest -N = N-K in o-Stellung zur $-SO_2$-Gruppe an den Phenylring gebunden ist und K der Rest des 1-(3',4'-Dichlorphenyl)-3-methyl-5-aminopyrazols oder eines Aminonaphtholsulfonsäureamids ist.

2. Monoazofarbstoffe gemäss Anspruch 1, worin X in p-Stellung zur $-SO_2$-Gruppe an den Sulfophenylring gebunden ist und K, R und X die in Anspruch 1 angegebenen Bedeutungen haben.

3. Monoazofarbstoffe gemäss Anspruch 2, worin R in o- oder p-Stellung zur $-SO_2$-Gruppe an den Phenylring gebunden ist und K, R und X die in Anspruch 2 angegebenen Bedeutungen haben.

4. Monoazofarbstoffe gemäss Anspruch 3, worin der Rest -N = N-K in o- oder p-Stellung zur $-SO_2$-Gruppe an den Phenylring gebunden ist, und K, R und X die in Anspruch 3 angegebenen Bedeutungen haben.

5. Monoazofarbstoffe gemäss Anspruch 4, worin K ein N-$C_{1-4}$-Alkylamino- oder N,N-Di-$C_{1-4}$-Alkylaminobenzolrest, der im Benzolring durch Methyl, Methoxy, Chlor und Acetylamino substituiert sein kann, und worin die N-Alkylreste unabhängig voneinander durch Hydroxy, Chlor, Cyano oder Phenyl substituiert sein können, ein Methoxybenzolrest, der im Benzolring durch Methyl substituiert sein kann, ein Methoxynaphthalinrest, ein Hydroxynaphthalinrest, der durch Sulfo substituiert sein kann, ein Aminonaphtholrest, der im Naphthalinkern durch Sulfo substituiert sein kann, und worin die Aminogruppe durch Methyl, α,β-Dibrompropionyl, α,β-Dibrompropionylaminobenzoyl und 2,6-Difluor-5-chlorpyrimidylaminobenzoyl substituiert sein kann, ein 1-Phenyl-3-methylpyrazolonrest, der im Phenylrest durch Methyl, Äthyl und Chlor substituiert sein kann, ein 1-Phenyl-3-methylaminopyrazolrest, der im Phenylrest durch Chlor und Sulfo substituiert sein kann, ein 2-Methyl- oder 2-Phenylindolrest, der in 1-Stellung durch Äthyl substituiert sein kann, ein N-Methyl- oder N-Äthyl-1,2,3,4-tetrahydrochinolinrest oder ein 1-Chlorphenylamino-2-pentyl-naphthimidazolrest, der im Naphthalinkern durch Hydroxy und Sulfo substituiert ist, und R Wasserstoff, Chlor, Methyl, Trifluormethyl, Carboxy oder eine $-SO_2-C_{1-2}$-Alkyl-, $-SO_2$-Benzyl-, 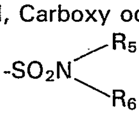, 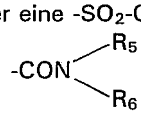 oder -CO-$R_7$-Gruppe ist, wobei $R_5$ Wasserstoff oder $C_{1-3}$-Alkyl, $R_6$ Wasserstoff, $C_{1-6}$-Alkyl, das durch Hydroxy oder Methoxy substituiert sein kann, oder Cyclohexyl und $R_7$ Phenyl oder Chlorphenyl bedeuten, und worin X Wasserstoff, Methyl, Chlor oder Äthoxy ist.

6. Monoazofarbstoffe gemäss Anspruch 5, worin K ein N,N-Di-$C_{1-4}$-alkylaminobenzolrest, der im Benzolkern durch Methyl, Methoxy, Chlor und Acetylamino substituiert sein kann, und worin die N-Alkylreste unabhängig voneinander durch Hydroxy, Chlor, Cyano oder Phenyl substituiert sein können, ein 1-Phenyl-3-methylaminopyrazolrest, der im Phenylrest durch Chlor und Sulfo substituiert sein kann, oder ein 2-Methyl- oder 2-Phenylindolrest, der in 1-Stellung durch Äthyl substituiert sein kann, ist, und R und X die in Anspruch 5 angegebenen Bedeutungen haben.

7. Monoazofarbstoffe gemäss Anspruch 6 der Formel

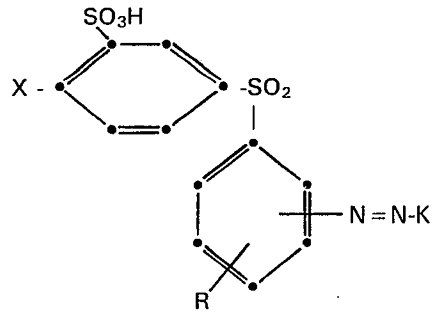

(2),

worin K, R und X die in Anspruch 6 angegebenen Bedeutungen haben und R und der Rest -N = N-K in o- oder p-Stellung zur $-SO_2$-Gruppe an den Phenylring gebunden sind.

8. Monoazofarbstoffe gemäss Anspruch 7, worin K ein 2-Methyl- oder 2-Phenylindolrest, ein N,N-Diäthyl-3-acetylaminoanilinrest, ein N,N-Diäthyl- oder N,N-Dibutyl-3-methylanilinrest, ein N-Äthyl-N-phenäthyl-3-methylanilinrest oder ein 1-Phenyl-3-methylaminopyrazolrest, X Wasserstoff, Chlor oder Methyl und R Wasserstoff, Chlor, Trifluormethyl, Äthylsulfonyl, p-Chlorbenzoyl, Sulfamoyl, N-Methylsulfamoyl, N,N-Dimethylsulfamoyl, N,N-Diäthylsulfamoyl oder N-Methyl-N-cyclohexylsulfamoyl ist.

9. Verfahren zur Herstellung der Monoazofarbstoffe gemäss Anspruch 1, dadurch gekennzeichnet, dass man eine Diazokomponente der Formel

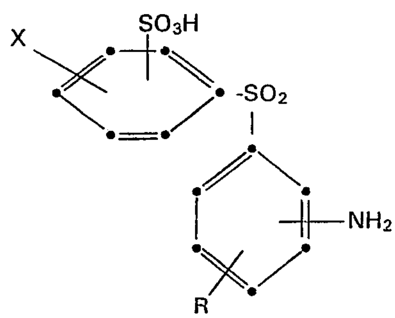

(3)

diazotiert und auf eine Kupplungskomponente der Formel

$$H - K \qquad (4)$$

kuppelt, wobei K, R und X in den Formeln (3) und (4) die in Anspruch 1 angegebenen Bedeutungen haben.

10. Verbindungen der Formel

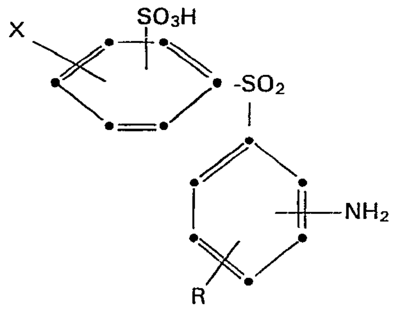

(3)

worin R Wasserstoff, Halogen, $C_{1-6}$-Alkyl, Trifluormethyl, Carboxy oder eine $-SO_2-C_{1-6}$-Alkyl, $-SO_2-R_1$, $-SO_2N\begin{smallmatrix}R_2\\R_3\end{smallmatrix}$, $-CON\begin{smallmatrix}R_2\\R_3\end{smallmatrix}$ oder $-CO-R_4$-Gruppe ist, wobei $R_1$ einen gegebenenfalls substituierten Phenyl- oder Naphthyl-$C_{1-4}$-alkylrest, $R_2$ und $R_3$ unabhängig voneinander Wasserstoff, $C_{1-6}$-Alkyl oder $C_{5-7}$-Cycloalkyl und $R_4$ einen gegebenenfalls durch Halogen, $C_{1-4}$-Alkyl und $C_{1-4}$-Alkoxy substituierten Phenylrest bedeuten, und worin X Wasserstoff, $C_{1-4}$-Alkyl, $C_{1-4}$-Alkoxy oder Halogen bedeutet, wobei die Reste R und X nicht beide Wasserstoff oder in p-Stellung zur $-SO_2$-Gruppe nicht beide Chlor oder Methyl oder X in p-Stellung zur $-SO_2$-Gruppe nicht Chlor oder Methyl und R Wasserstoff oder R in p--Stellung zur $-SO_2$-Gruppe nicht Methylsulfonyl oder Carboxy und X Methyl sein dürfen, wenn die $NH_2$--Gruppe in o-Stellung zur $-SO_2$-Gruppe an den Phenylring gebunden ist.

11. Verbindungen gemäss Anspruch 10, worin X in p-Stellung zur $-SO_2$-Gruppe an den Sulfophenylring gebunden ist, und R und X die in Anspruch 10 angegebenen Bedeutungen haben.

12. Verbindungen gemäss Anspruch 11, worin R in o- oder p-Stellung zur $-SO_2$-Gruppe an den Phenylring gebunden ist, und R und X die in Anspruch 11 angegebenen Bedeutungen haben.

13. Verbindungen gemäss Anspruch 12, worin die $NH_2$-Gruppe in o- oder p-Stellung zur $-SO_2$--Gruppe an den Phenylring gebunden ist, und R und X die in Anspruch 12 angegebenen Bedeutungen haben.

14. Verbindungen gemäss Anspruch 13, worin R Wasserstoff, Chlor, Methyl, Trifluormethyl, Carboxy oder eine $-SO_2-C_{1-2}$-Alkyl, $-SO_2$-Benzyl, $-SO_2N\begin{smallmatrix}R_5\\R_6\end{smallmatrix}$, $-CON\begin{smallmatrix}R_5\\R_6\end{smallmatrix}$ oder $-CO-R_7$-Gruppe ist, wobei $R_5$ Wasserstoff oder $C_{1-3}$-Alkyl, $R_6$ Wasserstoff, $C_{1-6}$-Alkyl, das durch Hydroxy oder Methoxy substituiert sein kann, oder Cyclohexyl und $R_7$ Phenyl oder Chlorphenyl bedeuten, und worin X Wasserstoff, Methyl, Chlor oder Äthoxy ist.

15. Verbindungen gemäss Anspruch 14 der Formel

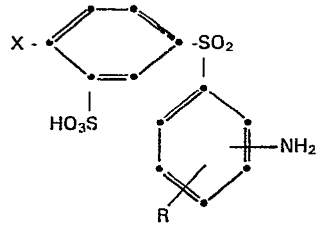

(5),

worin R und X die im Anspruch 14 angegebenen Bedeutungen haben und R in o- oder p-Stellung zur $-SO_2$-Gruppe an den Phenylring gebunden ist.

16. Verfahren zur Herstellung von Verbindungen gemäss Anspruch 10, dadurch gekennzeichnet, dass man eine Verbindung der Formel

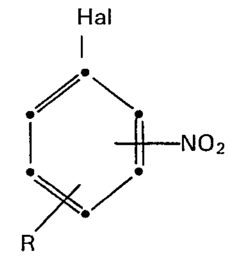

(6),

worin Hal Halogen bedeutet und R die in Anspruch 10 angegebene Bedeutung hat, mit einer Verbindung der Formel

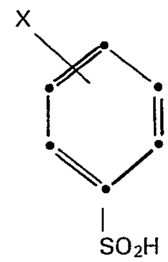

(7),

worin X die in Anspruch 10 angegebene Bedeutung hat, umsetzt, das Reaktionsprodukt sulfiert und anschliessend die $NO_2$-Gruppe zur Aminogruppe reduziert.

17. Verfahren zur Herstellung von Verbindungen gemäss Anspruch 10 der Formel (3), worin X Wasserstoff oder Halogen und R $-SO_2N\begin{smallmatrix}R_2\\R_3\end{smallmatrix}$ ist, wobei $R_2$ und $R_3$ unabhängig voneinander Wasserstoff, $C_{1-6}$-Alkyl oder $C_{5-7}$-Cycloalkyl bedeuten, dadurch gekennzeichnet, dass man eine Verbindung der Formel

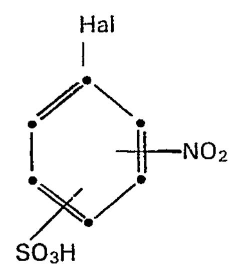

(8),

worin Hal Halogen bedeutet, mit einer Verbindung der Formel

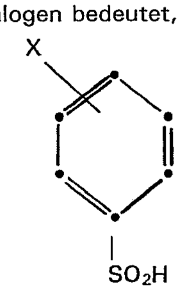

(7),

worin X Wasserstoff oder Halogen ist, umsetzt, das Reaktionsprodukt in ein Sulfonsäurehalogenid überführt, anschliessend sulfiert und dann mit einem Amin der Formel

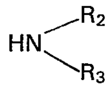

(9),

worin $R_2$ und $R_3$ die oben angegebenen Bedeutungen haben, umsetzt und anschliessend die $NO_2$--Gruppe zur Aminogruppe reduziert.

18. Verwendung der Monoazofarbstoffe gemäss den Ansprüchen 1 bis 8 bzw. der gemäss Anspruch 9 erhaltenen Monoazofarbstoffe zum Färben und Bedrucken.

19. Verfahren zum Färben und Bedrucken unter Verwendung der Monoazofarbstoffe gemäss Anspruch 1.

20. Verfahren gemäss Anspruch 19 zum Färben von Polyamidfasern.

**Claims**

1. A monoazo dye of the formula

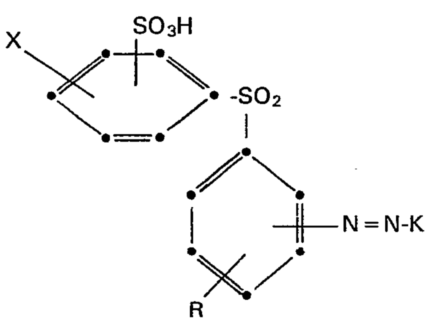

(1),

in which K is the radical of an aminobenzene, alkoxybenzene, alkoxynaphthalene, naphthol, aminonaphthol, pyrazolone, aminopyrazole, indole, naphthimidazole, diphenylamine, tetrahydroquinoline or acetoacetamide, which radicals may be further substituted, R is hydrogen, halogen, $C_{1-6}$-alkyl, trifluoromethyl, carboxyl or an $-SO_2-C_{1-6}$-alkyl, $-SO_2-R_1$, 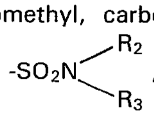, 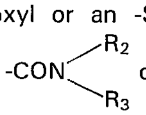 or $-CO-R_4$ group, in which $R_1$ is a substituted or unsubstituted phenyl- or naphthyl-$C_{1-4}$alkyl radical, each of $R_2$ and $R_3$ independently of the other is hydrogen or a substituted or unsubstituted $C_{1-6}$alkyl or $C_{5-7}$cycloalkyl radical and $R_4$ is a substituted or unsubstituted phenyl radical, and X is hydrogen, $C_{1-4}$alkyl, $C_{1-4}$-alkoxy or halogen, with the proviso that R in formula (1) may not be hydrogen or chlorine if the radical -N = N-K is bonded to the phenyl ring in the o-position relative to the $-SO_2$- group and K is the radical of 2-amino-8-hydroxynaphthalene-6-sulfonic acid, and that R in formula (1) may not be hydrogen if the radical -N = N-K is bonded to the phenyl ring in the o-position relative to the $-SO_2$ group and K is the radical of 1-(3',4'-dichlorophenyl)-3-methyl-5-aminopyrazole or of an aminonaphtholsulfonamide.

2. A monoazo dye according to claim 1, in which X is bonded to the sulfophenyl ring in the p-position relative to the $-SO_2$- group and K, R and X are as defined in claim 1.

3. A monoazo dye according to claim 2, in which R is bonded to the phenyl ring in the o- or p-position relative to the $-SO_2$- group and K, R and X are as defined in claim 2.

4. A monoazo dye according to claim 3, in which the radical -N = N-K is bonded to the phenyl ring in the -o or p-position relative to the $-SO_2$- group and K, R and X are as defined in claim 3.

5. A monoazo dye according to claim 4, in which K is an N-$C_{1-4}$alkylamino- or N,N-di-$C_{1-4}$alkylamino-benzene radical which may be substituted in the benzene ring by methyl, methoxy, chlorine and acetylamino and in which the N-alkyl moieties independently of one another may be substituted by hydroxy, chlorine, cyano or phenyl, a methoxybenzene radical which may be substituted in the benzene ring by methyl, a methoxynaphthalene radical, a hydroxynaphthalene radical which may be substituted by sulfo, an aminonaphthol radical which may be substituted in the naphthalene nucleus by sulfo and in which the amino group may be substituted by methyl, α,β-dibromopropionyl, α,β--dibromopropionylaminobenzoyl or 2,6-difluoro-5--chloropyrimidylaminobenzoyl, a 1-phenyl-3-methylpyrazolone radical which may be substituted in the phenyl moiety by methyl, ethyl and chlorine, a 1-phenyl-3-methylaminopyrazole radical which may be substituted in the phenyl moiety by chlorine and sulfo, a 2-methyl- or 2-phenylindole radical which may be substituted in the 1-position by ethyl, an N-methyl- or N-ethyl-1,2,3,4-tetrahydroquinoline radical or a 1-chlorophenylamino-2-pentylnaphthimidazole radical which is substituted in the naphthalene nucleus by hydroxy and sulfo, and R is hydrogen, chlorine, methyl, trifluoromethyl, carboxy or an $-SO_2-C_{1-2}$alkyl, $-SO_2$-benzyl 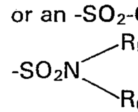, 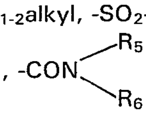 or $-CO-R_7$ group, in which $R_5$ is hydrogen or $C_{1-3}$alkyl, $R_6$ is hydrogen, $C_{1-6}$alkyl which may be substituted by hydroxy or methoxy, or cyclohexyl and $R_7$ is phenyl or chlorophenyl, and X is hydrogen, methyl, chlorine or ethoxy.

6. A monoazo dye according to claim 5, in which K is an N,N-di-$C_{1-4}$alkylaminobenzene radical which may be substituted in the benzene nucleus by methyl, methoxy, chlorine and acetylamino and in which the N-alkyl moieties independently of one another may be substituted by hydroxy, chlorine, cyano or phenyl, a 1-phenyl-3-methylaminopyrazole radical which may be substituted in the phenyl moiety by chlorine and sulfo, or a 2-methyl- or 2-phenylindole radical which may be substituted in the 1-position by ethyl, and R and X are as defined in claim 5.

7. A monoazo dye according to claim 6, of the formula

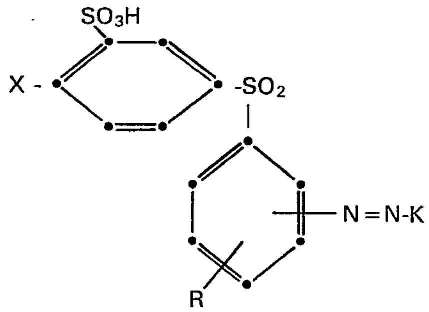

(2),

in which K, R and X are as defined in claim 6, and R and the radical -N = N-K are bonded to the phenyl ring in the o- or p-position relative to the $-SO_2-$ group.

8. A monoazo dye according to claim 7, in which K is a 2-methyl- or 2-phenylindole radical, an N,N-diethyl-3-acetylaminoaniline radical, an N,N-diethyl- or N,N-dibutyl-3-methylaniline radical, an N-ethyl-N-phenethyl-3-methylaniline radical or a 1-phenyl-3-methylaminopyrazole radical, X is hydrogen, chlorine or methyl and R is hydrogen, chlorine, trifluoromethyl, ethylsulfonyl, p-chlorobenzoyl, sulfamoyl, N-methylsulfamoyl, N,N-dimethylsulfamoyl, N,N-diethylsulfamoyl or N-methyl-N-cyclohexylsulfamoyl.

9. A process for the preparation of a monoazo dye according to claim 1, which comprises diazotising a diazo component of the formula

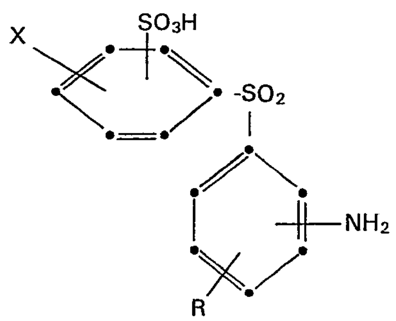

(3)

and coupling the diazotisation product to a coupling component of the formula

H - K (4)

in which K, R and X in formulae (3) and (4) are as defined in claim 1.

10. A compound of the formula

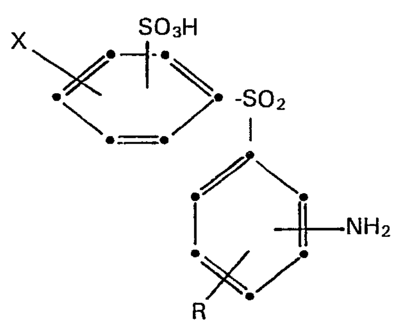

(3)

in which R is hydrogen, halogen, $C_{1-6}$alkyl, trifluoromethyl, carboxy or an $-SO_2-C_{1-6}$alkyl, $-SO_2-R_1-$,

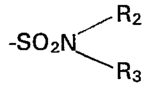 , 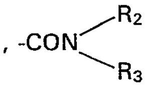 or $-CO-R_4$ group, in

which $R_1$ is a substituted or unsubstituted phenyl- or naphthyl-$C_{1-4}$alkyl radical, each of $R_2$ and $R_3$ independently of the other is hydrogen, $C_{1-6}$alkyl or $C_{5-7}$cycloalkyl and $R_4$ is a phenyl radical which is unsubstituted or substituted by halogen, $C_{1-4}$alkyl or $C_{1-4}$alkoxy, and X is hydrogen, $C_{1-4}$alkyl, $C_{1-4}$alkoxy or halogen, with the proviso that the radicals R and X may not both be hydrogen or may not both be chlorine or methyl in the p-position relative to the $-SO_2-$ group or X may not be chlorine or methyl in the p-position relative to the $-SO_2-$group when R is hydrogen or R may not be methylsulfonyl or carboxy in the p-position relative to the $-SO_2-$ group when X is methyl if the $NH_2$ group is bonded to the phenyl ring in the o-position relative to the $-SO_2-$ group.

11. A compound according to claim 10, in which X is bonded to the sulfophenyl ring in the p-position relative to the $-SO_2-$ group and R and X are as defined in claim 10.

12. A compound according to claim 11, in which R is bonded to the phenyl ring in the o- or p-position relative to the $-SO_2-$ group and R and X are as defined in claim 11.

13. A compound according to claim 12, in which the $NH_2$ group is bonded to the phenyl ring in the o- or p-position relative to the $-SO_2-$ group and R and X are as defined in claim 12.

14. A compound according to claim 13, in which R is hydrogen, chlorine, methyl, trifluoromethyl, carboxy or an $-SO_2-C_{1-2}$alkyl, $-SO_2$-benzyl,

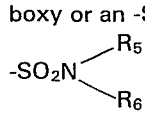 , 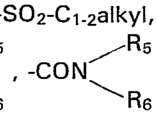 or $-CO-R_7$ group, in

which $R_5$ is hydrogen or $C_{1-3}$alkyl, $R_6$ is hydrogen, $C_{1-6}$alkyl which may be substituted by hydroxy or methoxy, or cyclohexyl and $R_7$ is phenyl or chlorophenyl, and X is hydrogen, methyl, chlorine or ethoxy.

15. A compound according to claim 14, of the formula

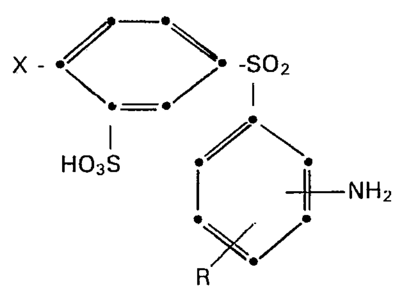

(5),

in which R and X are as defined in claim 14 and R is bonded to the phenyl ring in the o- or p-position relative to the $-SO_2-$ group.

16. A process for the preparation of a compound according to claim 10, which comprises reacting a compound of the formula

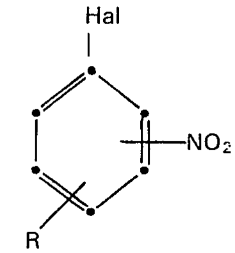

(6)

in which Hal is halogen and R is as defined in claim 10, with a compound of the formula

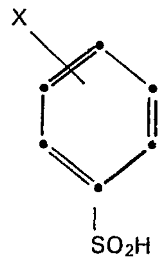

(7)

in which X is as defined in claim 10, sulfonating the reaction product and then reducing the $NO_2$ group to the amino group.

17. A process for the preparation of a compound according to claim 10 of the formula (3), in which X is hydrogen or halogen and R is 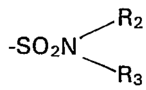 , in which each of $R_2$ and $R_3$ independently of the other is hydrogen, $C_{1-6}$alkyl or $C_{5-7}$cycloalkyl, which comprises reacting a compound of the formula

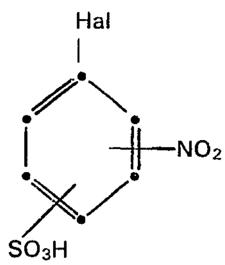

(8)

in which Hal is halogen, with a compound of the formula

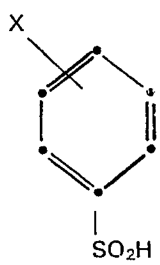

(7)

in which X is hydrogen or halogen, converting the reaction product into a sulfonic acid halide, subsequently sulfonating the halide and then reacting the product with an amine of the formula

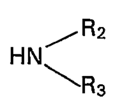

(9)

in which $R_2$ and $R_3$ are as defined above, and then reducing the $NO_2$ group to the amino group.

18. Use of a monoazo dye according to any one of claims 1 to 8 or of a monoazo dye obtained according to claim 9 for dyeing or printing.

19. A process for dyeing or printing using a monoazo dye according to claim 1.

20. A process according to claim 19 for dyeing polyamide fibres.

**Revendications**

1. Colorants mono-azoïques de formule:

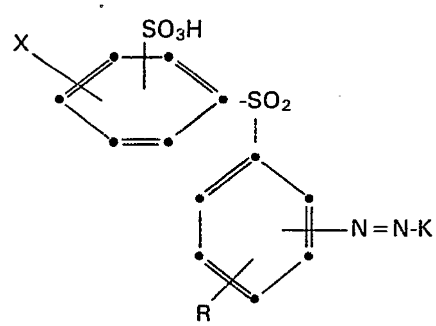

(1),

dans laquelle K est le reste d'un aminobenzène, d'un alcoxybenzène, d'un alcoxynaphtalène, d'un naphtol, d'un aminonaphtol, d'une pyrazolone, d'un aminopyrazol, d'un indol, d'un naphtimidazol, d'une diphénylamine, d'une tétrahydroquinoléine, ou d'un acétylacétamide, les restes mentionnés ci-dessus pouvant être encore substitués, et dans laquelle R représente un atome d'hydrogène ou d'halogène, ou un groupe alkyle en $C_{1-6}$, trifluorométhyle, carboxyle, ou un groupe $-SO_2$-(alkyle en $C_{1-6}$), $-SO_2-R_1$, $-SO_2NR_2R_3$, $CONR_2R_3$, ou $-CO-R_4$, $R_1$ étant un reste phényl- ou naphtyl-(alkyle en $C_{1-4}$), éventuellement substitué, $R_2$ et $R_3$, indépendamment l'un de l'autre, étant un atome d'hydrogène ou un groupe alkyle en $C_{1-6}$ ou cycloalkyle en $C_{5-7}$, éventuellement substitué, et $R_4$ étant un groupe phényle éventuellement substitué, et dans laquelle X représente un atome d'hydrogène ou d'halogène, ou un groupe alkyle en $C_{1-4}$ ou alcoxy en $C_{1-4}$, R dans la formule (1) ne pouvant être un atome d'hydrogène ou de chlore quand le reste -N=N-K est fixé sur le noyau phényle en position ortho par rapport au groupe $-SO_2-$, et que K est le reste de l'acide 2-amino-8-hydroxynaphtalène-6-sulfonique, et R dans la formule (1) ne pouvant être un atome d'hydrogène quand le reste -N=N-K est fixé sur le noyau phényle en position ortho par rapport au groupe $-SO_2-$ et que K est le reste du 1-(3',4'-dichlorophényl)-3-méthyl-5-aminopyrazol ou d'un amide d'un acide aminonaphtolsulfonique.

2. Colorants mono-azoïques conformes à la revendication 1, dans lesquels X est fixé sur le noyau sulfophényle en position para par rapport au groupe $-SO_2-$, et dans lesquels K, R et X ont les significations indiquées dans la revendication 1.

3. Colorants mono-azoïques conformes à la revendication 2, dans lesquels R est fixé sur le noyau phényle en position ortho ou para par rapport au

groupe $-SO_2-$, et dans lesquels K, R et X ont les significations indiquées dans la revendication 2.

4. Colorants mono-azoïques conformes à la revendication 3, dans lesquels le reste -N = N-K est fixé sur le noyau phényle en position ortho ou para par rapport au groupe $-SO_2-$, et dans lesquels K, R et X ont les significations indiquées dans la revendication 3.

5. Colorants mono-azoïques conformes à la revendication 4, dans lesquels K est le reste d'un N-(alkyle en $C_{1-4}$)aminobenzène ou d'un N,N- di-(alkyle en $C_{1-4}$)aminobenzène, qui peut être substitué sur le noyau benzénique par un groupe méthyle, méthoxy, acétylamino, et par un atome de chlore, et dans lesquels les groupes N-alkyle, indépendamment l'un de l'autre, peuvent être substitués par un atome de chlore ou par un groupe hydroxyle, cyano, ou phényle, le reste d'un méthoxybenzène qui peut être substitué sur le noyau benzénique par un groupe méthyle, le reste d'un méthoxynaphtalène, le reste d'un hydroxynaphtalène qui peut être substitué par un groupe sulfo, le reste d'un aminonaphtol qui peut être substitué sur le noyau naphtalène par un groupe sulfo, et dans lequel le groupe amino peut être substitué par un groupe méthyle, α,β-dibromopropionyle, α,β-dibromopropionylaminobenzoyle, ou 2,6-difluoro-5-chloropyrimidylaminobenzoyle, le reste d'une 1-phényle-3-méthylpyrazolone qui peut être substitué sur le noyau phényle par un groupe méthyle ou éthyle et par un atome de chlore, le reste d'un 1-phényle-3-méthylaminopyrazol qui peut être substitué sur le noyau phényle par un atome de chlore et par un groupe sulfo, le reste d'un 2-méthylindol ou d'un 2-phénylindol qui peut être substitué en position 1 par un groupe éthyle, le reste d'une N-méthyl- ou d'une N-éthyl-1,2,3,4-tetrahydroquinoléine ou le reste d'un 1-chlorophénylamino-2-pentyl-naphtimidazole qui est substitué sur le noyau naphtalène par un groupe hydroxyle et par un groupe sulfo, et dans lesquels R est un atome d'hydrogène ou de chlore ou un groupe méthyle, trifluorométhyle, carboxyle, $-SO_2$-(alkyle en $C_{1-2}$), $-SO_2$-benzyle, $-SO_2NR_5R_6$, $-CONR_5R_6$ ou $-CO-R_7$, $R_5$ représentant un atome d'hydrogène ou un groupe alkyle en $C_{1-3}$, $R_6$ représentant un atome d'hydrogène ou un groupe alkyle en $C_{1-6}$ qui peut être substitué par un groupe hydroxyle ou méthoxy, ou un groupe cyclohexyle, et $R_7$ représentant un groupe phényle ou chlorophényle, et dans lesquels X est un atome d'hydrogène ou de chlore ou un groupe méthyle ou éthoxy.

6. Colorants mono-azoïques conformes à la revendication 5, dans lesquels K est le reste d'un N,N- di-(alkyle en $C_{1-4}$)aminobenzène, qui peut être substitué sur le noyau benzénique par un atome de chlore et par un groupe méthyle, méthoxy, et acétylamino, et dans lesquels les groupes N-alkyle, indépendamment l'un de l'autre, peuvent être substitués par un atome de chlore ou par un groupe hydroxyle, cyano ou phényle, le reste d'un 1-phényl-3-méthylaminopyrazol qui peut être substitué par un atome de chlore et par un groupe sulfo sur le groupe phényle, ou le reste d'un 2-méthylindol ou d'un 2-phénylindol qui peut être substitué en position 1 par un groupe éthyle, et dans lesquels R et X ont les significations indiquées dans la revendication 5.

7. Colorants mono-azoïques conformes à la revendication 6, de formule:

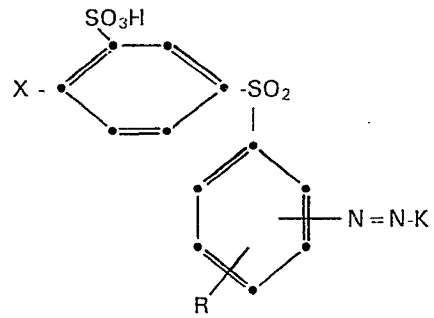

(2),

dans laquelle K, R et X ont les significations indiquées dans la revendication 6, et R et le reste -N = N-K sont fixés sur le noyau phényle en position ortho ou para par rapport au groupe $-SO_2-$.

8. Colorants mono-azoïques conformes à la revendication 7, dans lesquels K est le reste d'un 2-méthylindol ou d'un 2-phénylindol, le reste d'une N,N-diéthyl-3-acétylamino-aniline, le reste d'une N,N-diéthyl- ou N,N-dibutyl-3-méthylaniline, le reste d'une N-éthyl-N-phénéthyl-3-méthylaniline ou le reste d'un 1-phényl-3-méthylaminopyrazol, X est un atome d'hydrogène ou de chlore ou un groupe méthyle, et R est un atome d'hydrogène ou de chlore ou un groupe trifluorométhyle, éthylsulfonyle, p-chlorobenzoyle, sulfamoyle, N-méthylsulfamoyle, N,N-diméthylsulfamoyle, N,N-diéthylsulfamoyle, ou N-méthyl-N-cyclohexylsulfamoyle.

9. Procédé de préparation des colorants mono-azoïques conformes à la revendication 1, caractérisé en ce que l'on diazote un composant diazoïque de formule:

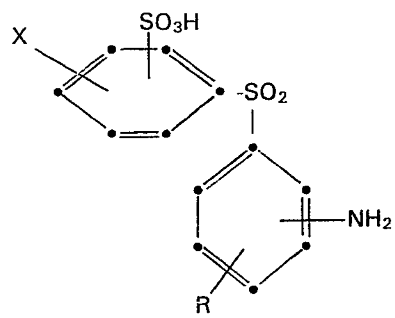

(3)

et qu'on effectue sa copulation sur un composant de copulation de formule:

H - K (4)

K, R et X ayant dans les formules (3) et (4) les significations indiquées dans la revendication 1.

10. Composés de formule:

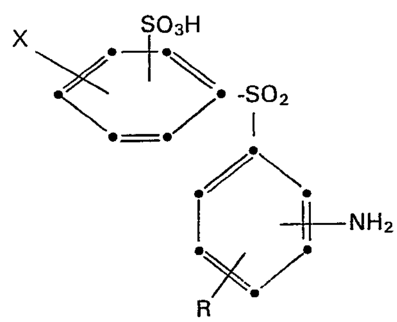

(3)

dans laquelle R est un atome d'hydrogène ou d'halogène ou un groupe alkyle en $C_{1-6}$, trifluorométhyle, carboxyle, ou un groupe $-SO_2$-(alkyle en $C_{1-6}$), $-SO_2-R_1$, $-SO_2NR_2R_3$, $-CONR_2R_3$, ou $-CO-R_4$, $R_1$ étant un groupe phényl- ou naphtyl-(alkyle en $C_{1-4}$), éventuellement substitué, $R_2$ et $R_3$, indépendamment l'un de l'autre, étant un atome d'hydrogène ou un groupe alkyle en $C_{1-6}$ ou cycloalkyle en $C_{5-7}$, et $R_4$ étant un groupe phényle éventuellement substitué par un atome d'halogène ou par un groupe alkyle en $C_{1-4}$ ou alcoxy en $C_{1-4}$, et dans laquelle X est un atome d'hydrogène ou d'halogène ou un groupe alkyle en $C_{1-4}$ ou alcoxy en $C_{1-4}$, les groupes R et X ne pouvant être tous les deux des atomes d'hydrogène, ou ne pouvant être, en position para par rapport au groupe $-SO_2-$, tous les deux des atomes de chlore ou des groupes méthyle, ou bien X, en position para par rapport au groupe $-SO_2-$, ne pouvant être un atome de chlore ou un groupe méthyle et R un atome d'hydrogène, ou bien R, en position para par rapport au groupe $-SO_2-$, ne pouvant être un groupe méthylsulfonyle ou carboxyle et X un groupe méthyle, si le groupe $NH_2$ est fixé sur le noyau phényle en position ortho par rapport au groupe $-SO_2-$.

11. Composés conformes à la revendication 10, dans lesquels X est fixé sur le noyau sulfophényle en position para par rapport au groupe $-SO_2-$, et R et X ont les significations indiquées dans la revendication 10.

12. Composés conformes à la revendication 11, dans lesquels R est fixé sur le noyau phényle en position ortho ou para par rapport au groupe $-SO_2-$, et R et X ont les significations indiquées dans la revendication 11.

13. Composés conformes à la revendication 12, dans lesquels le groupe $NH_2$ est fixé sur le noyau phényle en position ortho ou para par rapport au groupe $-SO_2-$, et R et X ont les significations indiquées dans la revendication 12.

14. Composés conformes à la revendication 13, dans lesquels R est un atome d'hydrogène ou de chlore ou un groupe méthyle, trifluorométhyle, carboxyle, ou un groupe $-SO_2$-(alkyle en $C_{1-2}$), $-SO_2$-benzyle, $-SO_2NR_5R_6$, $-CONR_5R_6$ ou $-CO-R_7$, $R_5$ étant un atome d'hydrogène ou un groupe alkyle en $C_{1-3}$, $R_6$ étant un atome d'hydrogène ou un groupe alkyle en $C_{1-6}$ qui peut être substitué par un groupe hydroxyle ou méthoxy, ou un groupe cyclohexyle, et $R_7$ étant un groupe phényle ou chlorophényle, et dans lequel X est un atome d'hydrogène ou de chlore ou un groupe méthyle ou éthoxy.

15. Composés conformes à la revendication 14, de formule:

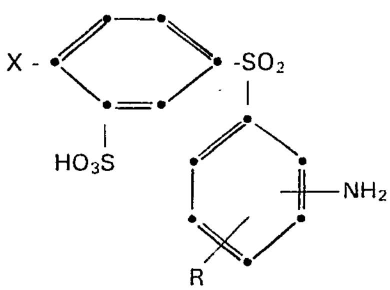

(5),

dans lesquels R et X ont les significations indiquées dans la revendication 14, et R est fixé sur le noyau phényle en position ortho ou para par rapport au groupe $-SO_2-$.

16. Procédé de préparation des composés conformes à la revendication 10, caractérisé en ce que l'on fait réagir un composé de formule:

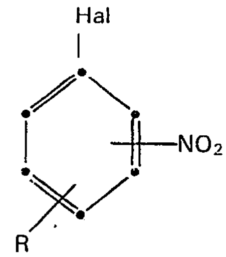

(6),

dans laquelle Hal représente un atome d'halogène et R a la signification indiquée dans la revendication 10, avec un composé de formule:

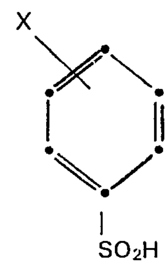

(7),

dans laquelle X a la signification indiquée dans la revendication 10, on sulfone le produit de réaction, et on réduit ensuite le groupe $NO_2$ en un groupe amino.

17. Procédé de préparation des composés conformes à la revendication 10 de formule (3), dans lesquels X est un atome d'hydrogène ou d'halogène et R est le groupe $-SO_2NR_2R_3$, $R_2$ et $R_3$ représentant indépendamment l'un de l'autre un atome d'hydrogène ou un groupe alkyle en $C_{1-6}$ ou cycloalkyle en $C_{5-7}$, caractérisé en ce que l'on fait réagir un composé de formule:

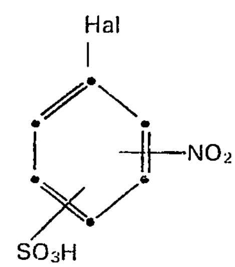

(8),

dans laquelle Hal représente un atome d'halogène, avec un composé de formule:

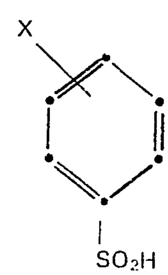

(7),

dans laquelle X est un atome d'hydrogène ou d'halogène, on transforme le produit de réaction en un halogénure d'acide sulfonique, que l'on sulfone ensuite et que l'on fait ensuite réagir avec une amine de formule:

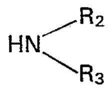 (9),

dans laquelle $R_2$ et $R_3$ ont les significations indiquées plus haut, et que l'on réduit ensuite le groupe $NO_2$ en un groupe amino.

18. Utilisation des colorants mono-azoïques conformes aux revendications 1 à 8, ou des colorants mono-azoïques obtenus conformément à la revendication 9, pour la teinture et l'impression.

19. Procédé de teinture et d'impression utilisant les colorants mono-azoïques conformes à la revendication 1.

20. Procédé conforme à la revendication 19 pour la teinture de fibres en polyamides.